# EUROPEAN PATENT APPLICATION

(11) **EP 4 543 098 A1**
(43) Date of publication of application: **23.04.2025**
(21) Application number: 23838717.9
(22) Date of filing: 29.06.2023
(51) Int. Cl.: H04W 52/02, H04W 68/02

(54) **COMMUNICATION METHOD AND APPARATUS**

(30) Priority: 13.07.2022 CN 202210820586
(71) Applicant: Huawei Technologies Co., Ltd., Shenzhen, Guangdong 518129 (CN)
(72) Inventor: WANG, Feng, Shenzhen, Guangdong 518129 (CN); LUO, Zhihu, Shenzhen, Guangdong 518129 (CN); JIN, Zhe, Shenzhen, Guangdong 518129 (CN)
(74) Representative: Gill Jennings & Every LLP
(86) International application number: PCT/CN2023/104030
(87) International publication number: WO 2024/012224

(57) **Abstract**

This application provides a communication method and apparatus. The method includes: A terminal device receives a wake-up signal from a network device, where the wake-up signal includes a first identifier; and when the first identifier is an identifier of the terminal device, the terminal device receives paging-related information based on a length of the first identifier or initiates random access based on a length of the first identifier. **In** the technical solutions provided in this application, the terminal device may receive the paging-related information or initiate random access based on the length of the identifier of the terminal device in the wake-up signal, to reduce power consumption.

## Description

This application claims priority to Chinese Patent Application No. 202210820586.0, filed with the China National Intellectual Property Administration on July 13, 2022 and entitled "COMMUNICATION METHOD AND APPARATUS", which is incorporated herein by reference in its entirety.

### TECHNICAL FIELD

This application relates to the communication field, and more specifically, to a communication method and apparatus.

### BACKGROUND

To reduce power consumption of a terminal device, the terminal device may receive a wake-up signal via a separate small low-power circuit, for example, a wake-up receiver (wake-up receiver, WUR), and a main radio may be in an off state or a deep sleep state. After detecting the wake-up signal via the WUR, the terminal device may trigger wake-up of the main radio based on the wake-up signal, so that the main radio may be configured to perform data transmission. At present, there is no solution for disclosing a specific function of the WUR.

### SUMMARY

This application provides a communication method and apparatus. In the method, a terminal device may receive paging-related information or initiate random access based on a length of an identifier of the terminal device in a wake-up signal, to reduce power consumption.

According to a first aspect, a communication method is provided. The method may be performed by a terminal device, or may be performed by a chip, a chip system, or a circuit configured in a terminal device. This is not limited in this application. The following uses an example for description in which the terminal device performs the method.

The method may include: The terminal device receives a wake-up signal from a network device, where the wake-up signal includes a first identifier; and when the first identifier is an identifier of the terminal device, the terminal device receives paging-related information based on a length of the first identifier or initiates random access based on a length of the first identifier.

According to the method in this embodiment, after receiving the wake-up signal, the terminal device may receive the paging-related information or initiate random access based on the length of the identifier of the terminal device (the first identifier) in the wake-up signal.

For example, when the length of the identifier of the terminal device is short, a false alarm problem is obvious. Therefore, the terminal device may receive the paging-related information to avoid power consumption caused by a false alarm. For another example, when the length of the identifier of the terminal device is long, power consumption caused by a false alarm problem is small, or there may be no false alarm problem. Therefore, after receiving the wake-up signal, the terminal device may directly initiate random access without receiving the paging-related information, to avoid power consumption caused by receiving paging. In this way, that the terminal device receives the paging-related information or initiates random access based on the length of the identifier of the terminal device in the wake-up signal is conducive to reducing power consumption of the terminal device.

With reference to the first aspect, in some implementations of the first aspect, that the terminal device receives paging-related information based on a length of the first identifier or initiates random access based on a length of the first identifier includes: If the length of the first identifier satisfies a first condition, the terminal device receives the paging-related information; or if the length of the first identifier satisfies a second condition, the terminal device initiates random access. The first condition is different from the second condition.

In this embodiment, the first condition may include, for example, that the length of the identifier of the terminal device is less than or equal to a second length, or that the length of the identifier of the terminal device falls within a length range (for example, denoted as a first length range).

According to the method in this embodiment, after receiving the wake-up signal, the terminal device first determines whether the length of the identifier of the terminal device in the wake-up signal satisfies the first condition, for example, whether the length is less than or equal to the second length, for another example, whether the length falls within the first length range. If the length satisfies the first condition, the terminal device may first receive the paging-related information, and then determine, based on the paging-related information, whether to initiate random access. A shorter length of the identifier of the terminal device leads to a more obvious false alarm problem. Therefore, when the length of the identifier of the terminal device is short, the terminal device may first receive the paging-related information, and then determine whether to initiate random access. This can avoid power consumption caused by initiating random access by the terminal device under the effect of a false alarm.

In this embodiment, the second condition may include, for example, that the length of the identifier of the terminal device is greater than or equal to a third length, or that the length of the identifier of the terminal device falls within a length range (for example, denoted as a second length range).

According to the method in this embodiment, after receiving the wake-up signal, the terminal device first determines whether the length of the identifier of the terminal device in the wake-up signal satisfies the second condition, for example, whether the length is greater than or equal to the third length, for another example, whether the length falls within the second length range. If the length satisfies the second condition, the terminal device may initiate random access. When the length of the identifier of the terminal device is long, power consumption caused by a false alarm problem is small, or there may be no false alarm problem. Therefore, in this case, after receiving the wake-up signal, the terminal device may directly initiate random access without receiving the paging-related information, to avoid power consumption caused by receiving paging and improve an energy saving gain.

With reference to the first aspect, in some implementations of the first aspect, the first condition is that the length of the first identifier is less than or equal to a first preset value; and/or the second condition is that the length of the first identifier is greater than or equal to a second preset value.

The first preset value may be, for example, the second length, or a maximum length in the first length range. The second preset value may be, for example, the third length, or a minimum length in the second length range.

With reference to the first aspect, in some implementations of the first aspect, the length of the first identifier satisfies the first condition, and the method further includes: The terminal device initiates random access based on the paging-related information when the paging-related information includes the identifier of the terminal device; or the terminal device continues to monitor the wake-up signal when the paging-related information does not include the identifier of the terminal device.

For example, the terminal device may determine, based on the paging-related information, whether the terminal device is paged. If the terminal device is paged, the terminal device initiates random access; or if the terminal device is not paged, the terminal device continues to monitor the wake-up signal.

With reference to the first aspect, in some implementations of the first aspect, the paging-related information includes one or more of the following: a paging message, a paging early indication PEI, and a paging physical downlink control channel PDCCH.

With reference to the first aspect, in some implementations of the first aspect, the wake-up signal includes the length of the first identifier.

According to the method in this embodiment, the wake-up signal includes information about the length of the first identifier. In this case, the terminal device may learn the length of the first identifier based on the information after receiving the wake-up signal.

According to a second aspect, a communication method is provided. The method may be performed by a network device, or may be performed by a chip, a chip system, or a circuit configured in a network device. This is not limited in this application. The following uses an example for description in which the network device performs the method.

The method may include: The network device generates a wake-up signal, where the wake-up signal includes a first identifier, and a length of the first identifier is associated with a quantity of to-be-paged terminal devices; the network device sends the wake-up signal to the to-be-paged terminal device; and the network device sends, based on the length of the first identifier, paging-related information to a terminal device indicated by the first identifier, or the network device performs, based on the length of the first identifier, random access processing on a terminal device indicated by the first identifier.

According to the method in this embodiment, the length of the first identifier is associated with the quantity of to-be-paged terminal devices. This is conducive to determining an appropriate length of the first identifier for different application scenarios, to meet different application requirements. In addition, based on the length of the first identifier, the network device may send the paging-related information to the terminal device indicated by the first identifier, or perform random access processing on the terminal device indicated by the first identifier, to reduce power consumption.

With reference to the second aspect, in some implementations of the second aspect, that the network device determines the length of the identifier of the to-be-paged terminal device in the wake-up signal based on the quantity of to-be-paged terminal devices includes: If the quantity of to-be-paged terminal devices satisfies a third condition, the length of the first identifier is a first length.

In an example, the third condition may be, for example, that the quantity of to-be-paged terminal devices and a threshold (for example, a target threshold) satisfy a value relationship, or that the quantity of to-be-paged terminal devices falls within a preset threshold range (for example, a target threshold range). In another example, the third condition may be, for example, that there is a correspondence between the quantity of terminal devices and the length of the identifier of the terminal device.

With reference to the second aspect, in some implementations of the second aspect, the paging-related information includes one or more of the following: a paging message, a paging early indication PEI, and a paging physical downlink control channel PDCCH.

With reference to the second aspect, in some implementations of the second aspect, the wake-up signal includes the length of the first identifier.

According to the method in this embodiment, the wake-up signal includes information about the length of the first identifier. **In** this case, the terminal device may learn the length of the first identifier based on the information after receiving the wake-up signal.

According to a third aspect, a communication method is provided. The method may be performed by a terminal device, or may be performed by a chip, a chip system, or a circuit configured in a terminal device. This is not limited in this application. The following uses an example for description in which the terminal device performs the method.

The method may include: The terminal device sends first duration to a network device, where the first duration is duration needed by the terminal device to wake up a main radio, and the first duration is related to a cycle value of a paging cycle; and the terminal device receives paging-related information from the network device in a first paging cycle, where the first paging cycle is associated with the first duration.

According to the method in this embodiment, the terminal device may provide the first duration for the network device, and the network device may send the paging-related information to the terminal device in the first paging cycle associated with the first duration. Correspondingly, the terminal device may receive the paging-related information in the first paging cycle, to avoid a case in which the terminal device misses receiving the paging-related information because the terminal device cannot determine when to receive the information. **In** addition, the first duration provided by the terminal device for the network device is related to the cycle value of the paging cycle. The method is simple in design and is easy to implement.

With reference to the third aspect, in some implementations of the third aspect, the first duration is N times the cycle value of the paging cycle, and N is a positive integer.

According to the method in this embodiment, the first duration provided by the terminal device for the network device may be a multiple of the paging cycle. The method is simple in design and is easy to implement.

With reference to the third aspect, in some implementations of the third aspect, that the terminal device receives paging-related information from the network device in a first paging cycle includes: The terminal device receives the paging-related information from the network device on a first paging occasion in the first paging cycle. A location of the first paging occasion in the first paging cycle is associated with a location of a first wake-up occasion in a corresponding wake-up cycle, and the first wake-up occasion is an occasion on which the terminal device receives a wake-up signal.

With reference to the third aspect, in some implementations of the third aspect, the location of the first paging occasion in the first paging cycle is the same as the location of the first wake-up occasion in the corresponding wake-up cycle.

According to the method in this embodiment, the location of the first paging occasion in the first paging cycle is the same as the location of the first wake-up occasion in the corresponding wake-up cycle, so that the terminal device can receive the paging-related information quickly after waking up the main radio.

With reference to the third aspect, in some implementations of the third aspect, a location of the wake-up cycle corresponding to the first wake-up occasion in L wake-up cycles is the same as a location of the first paging cycle in M paging cycles, an offset between the wake-up cycle corresponding to the first wake-up occasion and the first paging cycle is equal to third duration, L and M are positive integers, and the third duration is any one of the following: duration between start locations of two adjacent wake-up frames, duration between start locations of two adjacent paging frames, and a larger one of the duration between the start locations of the two adjacent wake-up frames and the duration between the start locations of the two adjacent paging frames.

According to the method in this embodiment, the offset is properly adjusted, so that the terminal device can receive the paging-related information quickly after waking up the main radio.

According to a fourth aspect, a communication method is provided. The method may be performed by a network device, or may be performed by a chip, a chip system, or a circuit configured in a network device. This is not limited in this application. The following uses an example for description in which the network device performs the method.

The method may include: The network device receives first duration from a terminal device, where the first duration is duration needed by the terminal device to wake up a main radio, and the first duration is related to a cycle value of a paging cycle; and the network device sends paging-related information to the terminal device in a first paging cycle, where the first paging cycle is associated with the first duration.

According to the method in this embodiment, the network device may receive the first duration from the terminal device, and the network device may send the paging-related information to the terminal device in the first paging cycle associated with the first duration. Correspondingly, the terminal device may receive the paging-related information in the first paging cycle, to avoid a case in which the terminal device misses receiving the paging-related information because the terminal device cannot determine when to receive the information. In addition, the first duration is related to the cycle value of the paging cycle. The method is simple in design and is easy to implement.

With reference to the fourth aspect, in some implementations of the fourth aspect, the first duration is N times the cycle value of the paging cycle, and N is a positive integer.

According to the method in this embodiment, the first duration provided by the terminal device for the network device may be a multiple of the paging cycle. The method is simple in design and is easy to implement.

With reference to the fourth aspect, in some implementations of the fourth aspect, that the network device sends paging-related information to the terminal device in a first paging cycle includes: The network device sends the paging-related information to the terminal device on a first paging occasion in the first paging cycle. A location of the first paging occasion in the first paging cycle is associated with a location of a first wake-up occasion in a corresponding wake-up cycle, and the first wake-up occasion is an occasion on which the terminal device receives a wake-up signal.

With reference to the fourth aspect, in some implementations of the fourth aspect, the location of the first paging occasion in the first paging cycle is the same as the location of the first wake-up occasion in the corresponding wake-up cycle.

According to the method in this embodiment, the location of the first paging occasion in the first paging cycle is the same as the location of the first wake-up occasion in the corresponding wake-up cycle, so that the terminal device can receive the paging-related information quickly after waking up the main radio.

With reference to the fourth aspect, in some implementations of the fourth aspect, a location of the wake-up cycle corresponding to the first wake-up occasion in L wake-up cycles is the same as a location of the first paging cycle in M paging cycles, an offset between the wake-up cycle corresponding to the first wake-up occasion and the first paging cycle is equal to third duration, L and M are positive integers, and the third duration is any one of the following: duration between start locations of two adjacent wake-up frames, duration between start locations of two adjacent paging frames, and a larger one of the duration between the start locations of the two adjacent wake-up frames and the duration between the start locations of the two adjacent paging frames.

According to the method in this embodiment, the offset is properly adjusted, so that the terminal device can receive the paging-related information quickly after waking up the main radio.

According to a fifth aspect, a communication method is provided. The method may be performed by a terminal device, or may be performed by a chip, a chip system, or a circuit configured in a terminal device. This is not limited in this application. The following uses an example for description in which the terminal device performs the method.

The method may include: The terminal device obtains indication information, where the indication information indicates a first paging cycle that is present after the terminal device wakes up a main radio; and the terminal device receives paging-related information in the first paging cycle.

According to the method in this embodiment, the terminal device may receive, according to an indication of the indication information, the paging-related information in the first paging cycle that is present after the terminal device wakes up the main radio, to avoid a case in which the terminal device cannot determine when to receive the paging-related information.

With reference to the fifth aspect, in some implementations of the fifth aspect, the first paging cycle is a K^{th} paging cycle after the terminal device wakes up the main radio, and K is a positive integer.

According to the method in this embodiment, the indication information may indicate the first paging cycle by using a "paging cycle" as a granularity. The first paging cycle is indicated by using the "paging cycle" as a granularity, to avoid a case in which the terminal device cannot determine when to receive the paging-related information. The method is simple in design and is easy to implement.

With reference to the fifth aspect, in some implementations of the fifth aspect, the first paging cycle is determined based on a priority or a delay requirement of the terminal device.

According to the method in this embodiment, the first paging cycle of the terminal device is determined based on the priority or the delay requirement of the terminal device, so that the terminal device with a high priority or a high delay requirement can receive the paging-related information quickly after waking up the main radio, thereby reducing an unnecessary waiting time.

With reference to the fifth aspect, in some implementations of the fifth aspect, that the terminal device obtains indication information includes: The terminal device receives a wake-up signal from a network device, where the wake-up signal includes the indication information.

According to the method in this embodiment, the indication information may be carried in the wake-up signal, so that the terminal device may obtain the indication information by receiving the wake-up signal from the network device.

With reference to the fifth aspect, in some implementations of the fifth aspect, the terminal device includes a first terminal device and a second terminal device, and a first paging cycle after the first terminal device wakes up a main radio is the same as a first paging cycle after the second terminal device wakes up a main radio.

According to the method in this embodiment, a same first paging cycle may be configured for both the first terminal device and the second terminal device by using the indication information, so that the first terminal device and the second terminal device can receive the paging-related information in the same paging cycle. A same first paging cycle is configured for all of a plurality of terminal devices. This is conducive to reducing complexity of paging the plurality of terminal devices by the network device, and is easy to implement.

According to a sixth aspect, a communication method is provided. The method may be performed by a network device, or may be performed by a chip, a chip system, or a circuit configured in a network device. This is not limited in this application. The following uses an example for description in which the network device performs the method.

The method may include: The network device determines a first paging cycle that is present after a terminal device wakes up a main radio, where the first paging cycle is used by the terminal device to receive paging-related information; and the network device sends indication information to the terminal device, where the indication information indicates the first paging cycle.

According to the method in this embodiment, the network device may send the indication information to the terminal device, so that the terminal device may receive, according to an indication of the indication information, the paging-related information in the first paging cycle that is present after the terminal device wakes up the main radio, to avoid a case in which the terminal device cannot determine when to receive the paging-related information.

With reference to the sixth aspect, in some implementations of the sixth aspect, the first paging cycle is a K^{th} paging cycle after the terminal device wakes up the main radio, and K is a positive integer.

According to the method in this embodiment, the indication information may indicate the first paging cycle by using a "paging cycle" as a granularity. The first paging cycle is indicated by using the "paging cycle" as a granularity, to avoid a case in which the terminal device cannot determine when to receive the paging-related information. The method is simple in design and is easy to implement.

With reference to the sixth aspect, in some implementations of the sixth aspect, the first paging cycle is determined based on a priority or a delay requirement of the terminal device.

According to the method in this embodiment, the first paging cycle of the terminal device is determined based on the priority or the delay requirement of the terminal device, so that the terminal device with a high priority or a high delay requirement can receive the paging-related information quickly after waking up the main radio, thereby reducing an unnecessary waiting time.

With reference to the sixth aspect, in some implementations of the sixth aspect, the terminal device includes a first terminal device and a second terminal device, and a first paging cycle after the first terminal device wakes up a main radio is the same as a first paging cycle after the second terminal device wakes up a main radio.

According to the method in this embodiment, a same first paging cycle may be configured for both the first terminal device and the second terminal device by using the indication information, so that the first terminal device and the second terminal device can receive the paging-related information in the same paging cycle. A same first paging cycle is configured for all of a plurality of terminal devices. This is conducive to reducing complexity of paging the plurality of terminal devices by the network device, and is easy to implement.

With reference to the sixth aspect, in some implementations of the sixth aspect, that the network device sends indication information to the terminal device includes: The network device sends a wake-up signal to the terminal device, where the wake-up signal includes the indication information.

According to a seventh aspect, a communication apparatus is provided. The apparatus is configured to perform the method according to any one of the possible implementations of the first aspect to the sixth aspect. Specifically, the apparatus may include units and/or modules, for example, a processing unit and/or a communication unit, configured to perform the method according to any one of the possible implementations of the first aspect to the sixth aspect.

In an implementation, the apparatus is a device (for example, a terminal device or a network device). When the apparatus is the device (for example, the terminal device or the network device), the communication unit may be a transceiver or an input/output interface, and the processing unit may be at least one processor. Optionally, the transceiver may be a transceiver circuit. Optionally, the input/output interface may be an input/output circuit.

In another implementation, the apparatus is a chip, a chip system, or a circuit used in a device (for example, a terminal device or a network device). When the apparatus is the chip, the chip system, or the circuit used in the device (for example, the terminal device or the network device), the communication unit may be an input/output interface, an interface circuit, an output circuit, an input circuit, a pin, a related circuit, or the like of the chip, the chip system, or the circuit, and the processing unit may be at least one processor, processing circuit, logic circuit, or the like.

According to an eighth aspect, a communication apparatus is provided. The apparatus includes at least one processor, configured to execute a computer program or instructions stored in a memory, to perform the method according to any one of the possible implementations of the first aspect to the sixth aspect. Optionally, the apparatus further includes the memory, configured to store the computer program or instructions. Optionally, the apparatus further includes a communication interface, and the processor reads, through the communication interface, the computer program or instructions stored in the memory.

In an implementation, the apparatus is a device (for example, a terminal device or a network device).

In another implementation, the apparatus is a chip, a chip system, or a circuit used in a device (for example, a terminal device or a network device).

According to a ninth aspect, this application provides a processor, configured to perform the methods provided in the foregoing aspects.

Sending, obtaining/receiving, and other operations related to the processor can be understood as output, receiving, input, and other operations performed by the processor, or can be understood as sending and receiving operations performed by a radio frequency circuit and an antenna, unless otherwise specified or the operations contradict actual functions or internal logic of the operations in related descriptions. This is not limited in this application.

According to a tenth aspect, a computer-readable storage medium is provided. The computer-readable storage medium stores program code to be executed by a device, and the program code is used to perform the method according to any one of the possible implementations of the first aspect to the sixth aspect.

According to an eleventh aspect, a computer program product including instructions is provided. When the computer program product runs on a computer, the computer is enabled to perform the method according to any one of the possible implementations of the first aspect to the sixth aspect.

According to a twelfth aspect, a chip is provided. The chip includes a processor and a communication interface. The processor reads, through the communication interface, instructions stored in a memory, to perform the method provided in any implementation of any one of the first aspect to the sixth aspect.

Optionally, in an implementation, the chip further includes the memory. The memory stores a computer program or instructions. The processor is configured to execute the computer program or instructions stored in the memory. When the computer program or instructions are executed, the processor is configured to perform the method provided in any implementation of any one of the first aspect to the sixth aspect.

According to a thirteenth aspect, a chip is provided. The chip includes a logic circuit and a communication interface. The communication interface is configured to: receive to-be-processed data and/or information, and transmit the to-be-processed data and/or information to the logic circuit. The logic circuit is configured to perform the method provided in any implementation of any one of the first aspect to the sixth aspect.

### BRIEF DESCRIPTION OF DRAWINGS

FIG. 1 is a diagram of a communication system according to an embodiment of this application;
FIG. 2 is a diagram of an example of receivers of a terminal device according to this application;
FIG. 3 is a diagram of a relationship between a wake-up cycle, a wake-up frame, and a wake-up occasion according to this application;
FIG. 4 is a diagram of an example of a communication method according to an embodiment of this application;
FIG. 5 is a diagram of another example of a communication method according to an embodiment of this application;
FIG. 6 is a diagram of an example of one wake-up cycle and one paging cycle according to an embodiment of this application;
FIG. 7 is a diagram of an example of one wake-up cycle and a plurality of paging cycles according to an embodiment of this application;
FIG. 8 is a diagram of another example of one wake-up cycle and a plurality of paging cycles according to an embodiment of this application;
FIG. 9 is a diagram of still another example of a communication method according to an embodiment of this application;
FIG. 10 is a block diagram of a communication apparatus according to an embodiment of this application; and
FIG. 11 is a block diagram of a communication apparatus according to an embodiment of this application.

### DESCRIPTION OF EMBODIMENTS

The following describes technical solutions of this application with reference to accompanying drawings.

The technical solutions provided in this application can be applied to various communication systems, for example, a 5th generation (5th generation, 5G) system, a new radio (new radio, NR) system, a long term evolution (long term evolution, LTE) system, an LTE frequency division duplex (frequency division duplex, FDD) system, and an LTE time division duplex (time division duplex, TDD) system. The technical solutions provided in this application can be further applied to future communication systems such as a sixth generation mobile communication system. The technical solutions provided in this application can be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an internet of things (intemet of things, IoT) communication system, or another communication system.

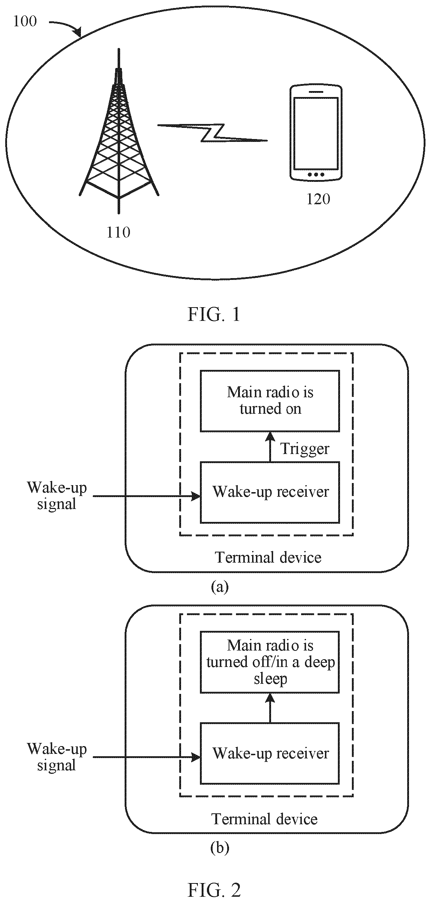

For ease of understanding embodiments of this application, a communication system provided in embodiments of this application is first detailed with reference to FIG. 1.

FIG. 1 is a diagram of a communication system 100 according to an embodiment of this application. The communication system 100 may include at least one network device, for example, a network device 110 shown in FIG. 1. The communication system 100 may further include at least one terminal device, for example, a terminal device 120 shown in FIG. 1. The terminal device 120 may receive a wake-up signal from the network device 110 by using a separate small low-power circuit, for example, a wake-up receiver (wake-up receiver, WUR), and a main radio may be in an off state or a deep sleep state. After detecting the wake-up signal by using the WUR, the terminal device 120 may trigger wake-up of the main radio based on the wake-up signal, so that the main radio may be configured to perform data transmission.

The terminal device in this embodiment of this application may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides a user with a voice/data, for example, a handheld device or a vehicle-mounted device having a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless telephone set, a session initiation protocol (session initiation protocol, SIP) phone, a wireless local loop (wireless local loop, WLL) station, a personal digital assistant (personal digital assistant, PDA), a handheld device having a wireless communication function, a computing device, another processing device connected to a wireless modem, a wearable device, a terminal device in a 5G network, and a terminal device in a future evolved public land mobile network (public land mobile network, PLMN). This is not limited in embodiments of this application.

By way of example rather than limitation, in this embodiment of this application, the terminal device may be a wearable device. The wearable device may also be referred to as a wearable smart device and is a generic name for wearable devices that are intelligently designed and developed for everyday wear by applying a wearable technology, for example, glasses, gloves, watches, clothes, and shoes. The wearable device is a portable device that is directly worn on a body or integrated into clothes or an accessory of a user. The wearable device is not only a hardware device, but also implements powerful functions through software support, data exchange, and cloud interaction. Generalized wearable smart devices include full-featured and large-size devices that can implement complete or partial functions without relying on smartphones, for example, a smartwatch and smart glasses; and include devices that are specialized in only one type of application function and that need to be used cooperatively with other devices such as a smartphone, for example, various smart bands or smart jewelry for monitoring physical signs.

In this embodiment of this application, an apparatus configured to implement a function of the terminal device may be a terminal device; or may be an apparatus that can support the terminal device in implementing the function, for example, a chip system or a chip, where the apparatus may be installed in the terminal device. In this embodiment of this application, the chip system may include a chip, or may include a chip and another discrete device.

The network device in this embodiment of this application may be a device configured to communicate with the terminal device. The network device may be a macro base station, a micro base station (also referred to as a small cell), a satellite, a radio network controller (radio network controller, RNC), a NodeB (NodeB, NB), a base station controller (base station controller, BSC), a base transceiver station (base transceiver station, BTS), a home NodeB (for example, a home evolved NodeB or a home NodeB, HNB), a baseband unit (baseband unit, BBU), or an access point (access point, AP), a wireless relay node, a wireless backhaul node, a transmission point (transmission point, TP), a transmission reception point (transmission reception point, TRP), or the like in a wireless fidelity (wireless fidelity, Wi-Fi) system. Alternatively, the network device may be a gNB or a transmission point (a TRP or a TP) in a 5G (for example, an NR) system, one or a group of antenna panels (including a plurality of antenna panels) of a gNB in a 5G system, or a network node that forms a gNB or a transmission point, for example, a distributed unit (distributed unit, DU). Alternatively, the network device may be a relay station, an access point, a network device in a future 6G network, a network device in a future evolved PLMN network, or the like. This is not limited in embodiments of this application. A specific technology and a specific device form that are used by the network device are not limited in embodiments of this application.

In a network structure, the network device may include a central unit (central unit, CU) node or a distributed unit (distributed unit, DU) node, a RAN device including a CU node and a DU node, or a RAN device including a CU control plane node (CU-CP node), a CU user plane node (CU-UP node), and a DU node.

The network device may provide a service for a cell, and the terminal device may communicate with the cell by using a transmission resource (for example, a frequency domain resource or a spectrum resource) allocated by the network device. The cell may belong to a macro base station (for example, a macro eNB or a macro gNB), or may belong to a base station corresponding to a small cell (small cell). The small cell herein may include a metro cell (metro cell), a micro cell (micro cell), a pico cell (pico cell), a femto cell (femto cell), and the like. These small cells are characterized by a small coverage area and low transmit power, and are applicable to providing high-rate data transmission services.

The network device and the terminal device may be at invariable locations, or may be movable. In this embodiment of this application, the network device and the terminal device may be deployed on land, including an indoor, outdoor, handheld, or vehicle-mounted device; may be deployed on the water; or may be deployed on an aircraft, a balloon, or a satellite in the air. Scenarios in which the network device and the terminal device are situated are not limited in embodiments of this application.

It should be understood that specific forms of the terminal device and the network device are not particularly limited in embodiments of this application, and are merely examples for description herein.

It should be understood that FIG. 1 is merely a simplified diagram used as an example for ease of understanding. The communication system may further include other network devices and/or other terminal devices not drawn in FIG. 1.

For ease of understanding embodiments of this application, terms in this application are briefly described.

### 1. Paging (paging)

According to an existing standard, when the terminal device is in an idle (idle) state or an inactive (inactive) state, the terminal device may periodically receive paging. For example, a paging receiving procedure performed by the terminal device includes the following steps:
(1) The terminal device may obtain, through calculation, a paging frame (paging frame, PF) and a location of a paging occasion (paging occasion, PO) in the PF based on an identifier (identifier, ID) (UE ID) of the terminal device.
(2) The terminal device monitors a physical downlink control channel (physical downlink control channel, PDCCH) (for example, which may also be referred to as a paging PDCCH) in the PO. The PDCCH includes downlink control information (downlink control information, DCI) (for example, which may also be referred to as paging DCI).
(3) If the terminal device detects the PDCCH, the terminal device receives a physical downlink shared channel (physical downlink shared channel, PDSCH) (for example, which may also be referred to as a paging PDSCH) at a location at which the PDCCH is used for scheduling. The paging PDSCH includes a paging message (paging message), and the paging message may indicate specific terminal devices that are paged. For example, the paging PDSCH includes a maximum of 32 paging records (paging records), each paging record may include one UE ID, and the UE ID indicates specific terminal device that is paged. NR is used as an example. The UE ID is, for example, a 5G system architecture evolution (system architecture evolution, SAE) temporary mobile subscriber identity (5G SAE temporary mobile station identifier, 5G-S-TMSI), and has a length of 48 bits (bits).

It should be understood that the paging receiving procedure is merely an example for description. For example, for details, refer to a related standard. This is not limited in this application.

### 2. Paging early indication (paging early indication, PEI)

Before each PO, the network device may send a PEI to the terminal device, to indicate whether a paging message associated with the terminal device is included in the PO. If the paging message associated with the terminal device is not included in the PO, the terminal device may not detect the PO, and enter a sleep state to implement power saving.

### 3. Main radio (main radio)

Generally, a same receiving module (or a receiver or a receiver circuit) is used when the terminal device performs a paging receiving procedure in an idle state or an inactive state and when the terminal device receives data in a connected state. In this application, for ease of description, a module that completes these functions (or performs related steps) is referred to as a main radio. It can be understood that the main radio is merely a name for differentiation, and a specific name does not constitute any limitation on the protection scope of this application.

The main radio has high power consumption, but has more functions, and can receive and send more types of signals. In a process of communicating with the network device, the main radio is configured to undertake main data transmission.

In this application, for example, the main radio may be configured to receive a synchronization signal block (synchronization signal block, SSB), a PDCCH, a PDSCH, or a channel state information-reference signal (channel state reference signal, CSI-RS), may be configured to receive a signal obtained through binary phase shift keying (binary phase shift keying, BPSK), quadrature phase shift keying (quadrature phase shift keying, QPSK), 16 quadrature amplitude modulation (quadrature amplitude modulation, QAM), 64-QAM, or 256-QAM, or may be configured to receive a signal on which fast Fourier transform (fast Fourier transform, FFT) is performed or a signal on which inverse fast Fourier transform (inverse fast Fourier transform, IFFT) is performed. The main radio may be a receiver whose local oscillator has high precision.

A signal received by the terminal device by using the main radio may be referred to as a signal transmitted on a main link. The main link represents a connection relationship between the terminal device and the network device, and is a logical concept rather than a physical entity. It can be understood that the main link is merely a name for differentiation, and a specific name does not constitute any limitation on the protection scope of this application.

When the terminal device receives paging by using the main radio, power consumption is high. For example, the terminal device needs to periodically wake up the main radio once in each discontinuous reception (discontinuous reception, DRX) cycle. When the terminal device does not transmit signaling or a data service, a behavior of waking up the main radio once in each DRX cycle causes main power consumption of the terminal device. In addition, because the main radio is complex, reference power consumption (or static power consumption) generated during running of the main radio is high.

To reduce power consumption caused by receiving paging by the terminal device, a possible method is as follows: The terminal device may receive a wake-up signal (wake-up signal/radio, WUS/WUR) by using a separate small low-power circuit. The small low-power circuit is capable of monitoring the wake-up signal with ultra-low power consumption, the main radio may be in an off state or a deep sleep state, and the small low-power circuit may be in an active state or an intermittent active state. After detecting the wake-up signal by using the small low-power circuit, the terminal device may trigger wake-up of the main radio based on the wake-up signal, so that the main radio may be configured to perform data transmission when being turned on. The small low-power circuit may be implemented by using a separate small circuit or chip with a simple structure, and has low power consumption.

### 4. Wake-up receiver (wake-up receiver, WUR)

The small low-power circuit may be referred to as, for example, a wake-up receiver (wake-up receiver, WUR), a low power wake-up receiver (low power wake-up receiver), a wake-up radio (wake-up radio, WUR), or an auxiliary receiver, or may be referred to as a wake-up circuit, a low-power circuit, or the like. A name of the small low-power circuit is not limited in this application. For ease of description, these names are uniformly described as a wake-up receiver below.

In this application, for example, the wake-up receiver may be configured to receive a signal obtained through on-off keying (on-off keying, OOK) modulation or frequency shift keying (frequency shift keying, FSK) modulation, may be configured to receive a signal on which FFT or IFFT does not need to be performed in a generation or decoding process, or may be configured to receive a signal obtained through Manchester encoding.

A signal received by the terminal device by using the wake-up receiver may be referred to as a signal transmitted on a wake-up link. The wake-up link represents a connection relationship between the terminal device and the network device, and is a logical concept rather than a physical entity. It can be understood that the wake-up link is merely a name for differentiation, and a specific name does not constitute any limitation on the protection scope of this application. For example, the wake-up link may also be referred to as a WUR link.

In this application, energy consumption of the wake-up receiver is lower than that of the main radio. For example, lower energy consumption of the wake-up receiver may be represented as at least one of the following aspects: Energy consumption that is of the wake-up receiver and that is used for receiving a signal transmitted on the wake-up link is lower than energy consumption that is of the main radio and that is used for receiving a signal transmitted on the main link; energy consumption of the wake-up receiver is lower than that of the main radio; the wake-up receiver is a receiver whose local oscillator has low precision; the wake-up receiver is a receiver that uses envelope detection; and the wake-up receiver is a receiver that does not need to perform FFT or IFFT on a signal.

FIG. 2 is a diagram of an example of receivers of a terminal device according to this application. A wake-up receiver may be configured to receive a wake-up signal, and the wake-up receiver may determine, based on whether the wake-up signal includes an identifier of the terminal device, whether to trigger wake-up of a main radio. For example, if the wake-up signal includes the identifier of the terminal device, the main radio is triggered to wake up (be turned on), as shown in (a) in FIG. 2. If the wake-up signal does not include the identifier of the terminal device, the main radio is in an off state or a deep sleep state, as shown in (b) in FIG. 2.

### 5. Wake-up signal

A signal received by using the wake-up receiver may be referred to as a "wake-up signal", a "signal transmitted on a wake-up link", a "WUR signal", or the like. A name of the signal received by using the wake-up receiver is not limited in this application. For ease of description, these names are uniformly described as a wake-up signal below.

The wake-up signal may indicate whether one terminal device or a group of terminal devices are paged. For example, if the wake-up signal includes an identifier (UE ID) of a terminal device, it indicates that the terminal device is paged. On the contrary, if the wake-up signal does not include an identifier of a terminal device, it indicates that the terminal device is not paged. The UE ID is, for example, a 5G-S-TMSI, or the UE ID may include some bits in the 5G-S-TMSI. For example, the UE ID may include most significant bits in the 5G-TMSI.

After receiving the wake-up signal, the terminal device may work in two possible manners. In a first manner, after receiving the wake-up signal, the terminal device may wake up the main radio based on the wake-up signal, receive paging (paging) by using the main radio, and then initiate random access. In a second manner, after receiving the wake-up signal, the terminal device may wake up the main radio based on the wake-up signal and directly initiate random access.

In this application, the wake-up signal may be a signal obtained through on-off keying (on-off keying, OOK) modulation or frequency shift keying (frequency shift keying, FSK) modulation, may be a signal on which fast Fourier transform (fast Fourier transform, FFT) or inverse fast Fourier transform (inverse fast Fourier transform, IFFT) does not need to be performed in a generation or decoding process, or may be a signal obtained through Manchester encoding. When OOK modulation is used, each bit (the bit may be an encoded bit) is corresponding to one symbol (which may also be referred to as one chip (chip)). In a possible case, when a bit is 1, it indicates that a signal is sent in symbol duration (that is, signal power in the symbol duration is not 0); or when a bit is 0, it indicates that no signal is sent in symbol duration (that is, signal power in the symbol duration is 0). In another case, when a bit is 0, it indicates that a signal is sent in symbol duration (that is, signal power in the symbol duration is not 0); or when a bit is 1, it indicates that no signal is sent in symbol duration (that is, signal power in the symbol duration is 0).

In addition to the wake-up signal, the signal transmitted by the network device on the wake-up link may further include a synchronization signal. The synchronization signal may be used for time synchronization of the wake-up link, and may be further used by the terminal device to detect quality of the wake-up link.

### 6. Wake-up cycle, wake-up frame, and wake-up occasion

In this application, the terminal device may periodically receive the wake-up signal from the network device by using the wake-up receiver. A cycle in which the terminal device receives the wake-up signal may be referred to as a wake-up cycle. One wake-up cycle may include one or more wake-up frames, one wake-up frame may include one or more wake-up occasions, and each wake-up occasion may be used for paging one or more terminal devices.

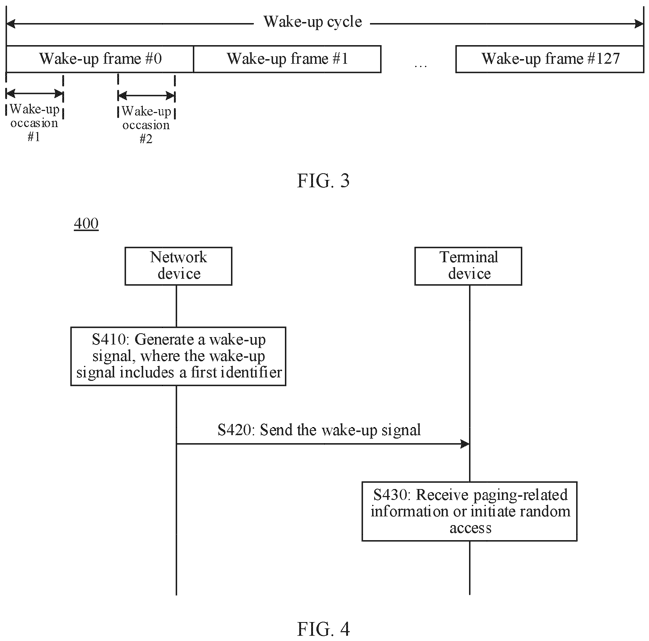

FIG. 3 is a diagram of a relationship between a wake-up cycle, a wake-up frame, and a wake-up occasion according to this application. For example, the wake-up cycle includes 128 wake-up frames: a wake-up frame #0 to a wake-up frame #127 in FIG. 3. Each wake-up frame includes two wake-up occasions, for example, the wake-up frame #0 in FIG. 3 includes a wake-up occasion #1 and a wake-up occasion #2.

In this embodiment, the terminal device may obtain, through calculation, a wake-up frame and a location of a wake-up occasion in the wake-up frame based on the identifier of the terminal device, and then the terminal device may receive the wake-up signal from the network device on the wake-up occasion in the wake-up frame. For example, if the wake-up frame and the wake-up occasion in the wake-up frame that are obtained by the terminal device through calculation based on the identifier of the terminal device are the wake-up frame #0 and the wake-up occasion #2, respectively, the terminal device may receive the wake-up signal at a location of a wake-up occasion #2 in a wake-up frame #0 in each wake-up cycle.

It should be understood that the quantity of wake-up frames included in the wake-up cycle and the quantity of wake-up occasions included in the wake-up frame shown in FIG. 3 are merely examples, and do not constitute any limitation on the protection scope of this application.

It should also be understood that the wake-up frames may be consecutive or nonconsecutive in time domain. This is not limited.

It should also be understood that the wake-up cycle, the wake-up frame, and the wake-up occasion are merely names for ease of description, and specific names thereof do not constitute any limitation on the protection scope of this application. For example, the wake-up cycle, the wake-up frame, and the wake-up occasion may also be referred to as a WUR cycle, a WUR frame, and a WUR occasion, respectively.

### 7. False alarm

In this application, the network device may add an identifier (UE ID) of a paged terminal device to the wake-up signal, which indicates whether one terminal device or one group of terminal devices are paged. Because a capacity of a wake-up signal that can be carried on one wake-up occasion is small, in some scenarios, a UE ID may include some bits in a 5G-S-TMSI. For example, the UE ID may include most significant bits in the 5G-TMSI. For different terminal devices, most significant bits in the 5G-TMSI may be the same. Therefore, different terminal devices may be corresponding to a same UE ID. For example, a UE ID of a terminal device #1 is the same as that of a terminal device #2. In this case, if the network device pages the terminal device #1 by using the same UE ID, a false alarm is generated for the terminal device #2. Due to impact of the false alarm, the terminal device #2 also wakes up a main radio, causing unnecessary power consumption.

Generation of a false alarm is related to lengths of UE IDs in the wake-up signal. For example, the network device needs to simultaneously page four terminal devices on a wake-up occasion, where identifiers of the four terminal devices are, for example, 00, 01, 10, and 11. When each of lengths of the UE IDs in the wake-up signal is two bits, the UE IDs of the four terminal devices may be corresponding to 00, 01, 10, and 11, respectively. Therefore, no false alarm problem is caused. However, when each of lengths of the UE IDs in the wake-up signal is one bit, for example, the UE IDs in the wake-up signal are most significant bits of the identifiers (00, 01, 10, and 11) of the four terminal devices, UE IDs corresponding to terminal devices whose identifiers are 00 and 01 are both 0, and UE IDs corresponding to terminal devices whose identifiers are 10 and 11 are both 1. In this case, if the network device needs to page the terminal device whose identifier is 10, a false alarm is generated for the terminal device whose identifier is 11. Generally, a shorter length of a UE ID leads to a more obvious false alarm problem.

It should be understood that the UE IDs in the foregoing example are merely an example for ease of understanding, and do not constitute any limitation on the protection scope of this application.

The foregoing briefly describes the terms in this application, and details are not described in the following embodiments again.

With reference to the accompanying drawings, the following details a communication method provided in embodiments of this application. The communication method provided in embodiments of this application can be applied to the communication system shown in FIG. 1.

FIG. 4 is a diagram of an example of a communication method according to an embodiment of this application. The method 400 may include S410 to S430.

S410: A network device generates a wake-up signal, where the wake-up signal includes a first identifier.

A length of the first identifier is associated with a quantity of to-be-paged terminal devices. The first identifier may indicate the terminal device. For example, the first identifier is an identifier (UE ID) of the terminal device. In an implementation, the to-be-paged terminal device may be notified by a core network to the network device. For example, the core network may send indication information to the network device, where the indication information may indicate the to-be-paged terminal device, so that the network device may learn the to-be-paged terminal device based on the indication information, and further learn the quantity of to-be-paged terminal devices.

For ease of understanding this embodiment, the following uses an example for description in which the first identifier is the identifier of the terminal device.

In a possible implementation, the length of the identifier of the terminal device in the wake-up signal may be determined by the network device. In this implementation, the network device may determine the length of the identifier of the terminal device in the wake-up signal based on the quantity of to-be-paged terminal devices. The determining the length of the identifier of the terminal device in the wake-up signal includes: determining a length of an identifier of each terminal device in the wake-up signal. The length of the identifier of the terminal device may be used by the terminal device to receive paging-related information or initiate random access. A quantity of terminal devices to be paged by the network device is a quantity of terminal devices to be paged by the network device on a wake-up occasion.

Optionally, by determining whether the quantity of to-be-paged terminal devices satisfies a third condition, the network device may determine that the length of the identifier of the terminal device in the wake-up signal is a first length. For example, if the quantity of to-be-paged terminal devices satisfies the third condition, the network device may determine that the length of the identifier of the terminal device in the wake-up signal is the first length. The first length may be a predefined length, or may be a length selected from a plurality of predefined lengths. This is not limited.

In an implementation, the third condition may be, for example, that the quantity of to-be-paged terminal devices and a threshold (for example, a target threshold) satisfy a value relationship, or that the quantity of to-be-paged terminal devices falls within a preset threshold range (for example, a target threshold range).

In an example, the third condition is, for example, that the quantity of to-be-paged terminal devices is greater than or equal to the target threshold, and the first length is, for example, 16 bits. In this case, if the quantity of to-be-paged terminal devices is greater than or equal to the target threshold, the network device may determine that the length of the identifier of the terminal device in the wake-up signal is 16 bits.

In another example, the third condition is, for example, that the quantity of to-be-paged terminal devices falls within the target threshold range, and the first length may be selected, for example, from 24 bits and 32 bits. In this case, if the quantity of to-be-paged terminal devices falls within the target threshold range, the network device may select a length from 24 bits and 32 bits as the length of the identifier of the terminal device in the wake-up signal. The network device may perform selection according to a predefined rule, or may perform random selection. This is not limited.

It should be understood that the target threshold/target threshold range may be predefined in a protocol, may be generated according to a predefined rule, may be preconfigured, or may be dynamically configured. The target threshold/target threshold range may be prestored in the network device, or the target threshold/target threshold range may be notified by another device to the network device. This is not limited in this application.

In another implementation, the third condition may be, for example, that there is a correspondence between the quantity of terminal devices and the length of the identifier of the terminal device. In other words, the network device may determine the length of the identifier of the terminal device in the wake-up signal based on the correspondence between the quantity of to-be-paged terminal devices and the length of the identifier of the terminal device. For example, it may be specified that when a quantity of to-be-paged terminal devices is 2, corresponding lengths of identifiers of the terminal devices are 24 bits and 32 bits. In this case, if the quantity of to-be-paged terminal devices is 2, the network device may determine that each of lengths of identifiers of the terminal devices in the wake-up signal is 24 bits or 32 bits. For another example, it may be specified that when a quantity of to-be-paged terminal devices is 3 or 4, corresponding lengths of identifiers of the terminal devices are 16 bits. In this case, if the quantity of to-be-paged terminal devices is 3 or 4, the network device may set each of lengths of identifiers of the terminal devices in the wake-up signal to 16 bits.

The correspondence may be predefined in a protocol, may be generated according to a predefined rule, or may be preconfigured. The correspondence may be prestored in the network device, or the correspondence may be notified by another device to the network device. This is not limited in this application.

Optionally, because a capacity of a signal (the wake-up signal) that can be carried on a same wake-up occasion is limited, when there are a large quantity of terminal devices to be paged by the network device, short lengths may be used for identifiers of the terminal devices. In this way, on a premise of ensuring a sufficient capacity of the signal that can be carried on the wake-up occasion, the network device can simultaneously page a large quantity of terminal devices. This reduces a delay in paging the terminal devices by the network device. Correspondingly, when there are a small quantity of terminal devices to be paged by the network device, long lengths may be used for identifiers of the terminal devices. This is conducive to reducing false alarms and reducing energy consumption of the terminal devices.

According to the method in this embodiment, the network device determines the length of the identifier of the terminal device in the wake-up signal based on the quantity of to-be-paged terminal devices. This is conducive to determining an appropriate length of the identifier of the terminal device for different application scenarios, to meet different application requirements.

S420: The network device sends the wake-up signal to the terminal device. Correspondingly, the terminal device receives the wake-up signal from the network device.

The wake-up signal may include the first identifier. That the first identifier is the identifier of the terminal device is used as an example. The identifier of the terminal device may be, for example, a 5G-S-TMSI, or may include some bits in the 5G-S-TMSI. For example, the identifier of the terminal device may include most significant bits in the 5G-TMSI. The length of the identifier of the terminal device may be determined by the network device based on the quantity of to-be-paged terminal devices in S410.

Optionally, after determining the length of the identifier of the terminal device, the network device may add information about the length to the wake-up signal, and then send the wake-up signal to the terminal device. For example, the network device may carry the information about the length by using two bits in the wake-up signal, so that after receiving the wake-up signal, the terminal device may learn the length of the identifier of the terminal device in the wake-up signal based on the information about the length.

S430: The terminal device receives the paging-related information or initiates random access.

In S430, the terminal device may receive the paging-related information or initiate random access based on the length of the first identifier. The paging-related information may indicate whether the terminal device is paged.

Optionally, the paging-related information includes one or more of the following: a paging message (paging message), a paging early indication (PEI), and a paging physical downlink control channel (paging PDCCH).

In a first possible manner (denoted as a manner 1), when the first identifier is the identifier of the terminal device, if the length of the identifier (the first identifier) of the terminal device satisfies a first condition, the terminal device receives the paging-related information.

In a second possible manner (denoted as a manner 2), when the first identifier is the identifier of the terminal device, if the length of the identifier (the first identifier) of the terminal device satisfies a second condition, the terminal device initiates random access.

The following separately describes the manner 1 and the manner 2.

### Manner 1

In an example, the first condition may include, for example, that the length of the identifier of the terminal device is less than or equal to a second length. In this case, if the length of the identifier of the terminal device in the wake-up signal is less than or equal to the second length, the terminal device receives the paging-related information.

In another example, the first condition may include, for example, that the length of the identifier of the terminal device falls within a length range (for example, denoted as a first length range). In this case, if the length of the identifier of the terminal device in the wake-up signal falls within the first length range, the terminal device receives the paging-related information.

The second length/first length range may be predefined in a protocol, may be generated according to a predefined rule, may be preconfigured, or may be dynamically configured. The second length/first length range may be prestored in the terminal device, or the second length/first length range may be notified by another device to the terminal device. This is not limited in this application. For example, preconfiguration in this application may be implemented, for example, through RRC configuration or system message configuration, and dynamic configuration in this application may be implemented, for example, through configuration by using DCI or a WUR signal.

Optionally, for the manner 1, the method 400 further includes: The terminal device initiates random access when the paging-related information includes the identifier of the terminal device; or the terminal device continues to monitor the wake-up signal when the paging-related information does not include the identifier of the terminal device. In other words, the terminal device may determine, based on the paging-related information, whether the terminal device is paged. If the terminal device is paged, the terminal device initiates random access; or if the terminal device is not paged, the terminal device continues to monitor the wake-up signal.

According to the method in this embodiment, after receiving the wake-up signal, the terminal device first determines whether the length of the identifier of the terminal device in the wake-up signal satisfies the first condition, for example, whether the length is less than or equal to the second length, for another example, whether the length falls within the first length range. If the length satisfies the first condition, the terminal device may first receive the paging-related information, and then determine, based on the paging-related information, whether to initiate random access. A shorter length of the identifier of the terminal device leads to a more obvious false alarm problem. Therefore, when the length of the identifier of the terminal device is short, the terminal device may first receive the paging-related information, and then determine whether to initiate random access. This can avoid power consumption caused by initiating random access by the terminal device in a case of a false alarm.

### Manner 2

**In** an example, the second condition may include, for example, that the length of the identifier of the terminal device is greater than or equal to a third length. **In** this case, if the length of the identifier of the terminal device in the wake-up signal is greater than or equal to the third length, the terminal device initiates random access.

In another example, the second condition may include, for example, that the length of the identifier of the terminal device falls within a length range (for example, denoted as a second length range). In this case, if the length of the identifier of the terminal device in the wake-up signal falls within the second length range, the terminal device initiates random access.

The third length/second length range may be predefined in a protocol, may be generated according to a predefined rule, may be preconfigured, or may be dynamically configured. The third length/second length range may be prestored in the terminal device, or the third length/second length range may be notified by another device to the terminal device. This is not limited in this application.

According to the method in this embodiment, after receiving the wake-up signal, the terminal device first determines whether the length of the identifier of the terminal device in the wake-up signal satisfies the second condition, for example, whether the length is greater than or equal to the third length, for another example, whether the length falls within the second length range. If the length satisfies the second condition, the terminal device may initiate random access. When the length of the identifier of the terminal device is long, power consumption caused by a false alarm problem is small, or there may be no false alarm problem. Therefore, in this case, after receiving the wake-up signal, the terminal device may directly initiate random access without receiving the paging-related information, to avoid power consumption caused by receiving paging and improve an energy saving gain.

Optionally, the terminal device may further determine, by using a same condition (for example, denoted as a fourth condition), whether the terminal device receives the paging-related information or initiates random access. In a possible case, if the length of the identifier of the terminal device satisfies a fourth condition, the terminal device receives the paging-related information; or if the length of the identifier of the terminal device does not satisfy a fourth condition, the terminal device initiates random access. In this case, the fourth condition may be, for example, the same as the first condition. In another possible case, if the length of the identifier of the terminal device does not satisfy a fourth condition, the terminal device receives the paging-related information; or if the length of the identifier of the terminal device satisfies a fourth condition, the terminal device initiates random access. In this case, the fourth condition may be, for example, the same as the second condition.

Optionally, the first condition and the second condition may be identical or different. In some scenarios, the first condition and the second condition are a same condition. For example, the first condition and the second condition may include that the length of the identifier of the terminal device is equal to a fourth length. In this case, if the length of the identifier of the terminal device in the wake-up signal is equal to the fourth length, that is, if the first condition and the second condition are satisfied, the terminal device may receive the paging-related information, or may initiate random access.

It should be understood that the fourth length in this embodiment may be a value, or may be a value range. This is not limited. The fourth length may be an invariable value predefined in a protocol, may be a value generated according to a predefined rule, may be a preconfigured invariable value, or may be a dynamically configured value. The fourth length may be prestored in the terminal device, or the fourth length may be notified by another device to the terminal device.

In an optional embodiment, the network device may directly indicate, in the wake-up signal, the terminal device whether to receive the paging-related information or perform random access without receiving the paging-related information after receiving the wake-up signal for waking up the terminal device. In other words, the terminal device may leam, by using the wake-up signal, whether to receive the paging-related information before initiating random access.

In another optional embodiment, based on the quantity of to-be-paged terminal devices, the terminal device may receive the paging-related information or initiate random access. For example, when the quantity of to-be-paged terminal devices is greater than a preset value (for example, denoted as a first value), the terminal device receives the paging-related information; or when the quantity of to-be-paged terminal devices is less than a preset value (for example, denoted as a second value), the terminal device initiates random access. The terminal device may learn the quantity of to-be-paged terminal devices based on the received wake-up signal.

Optionally, the method 400 further includes: The network device sends, based on the length of the first identifier, the paging-related information to a terminal device indicated by the first identifier, or performs, based on the length of the first identifier, random access processing on a terminal device indicated by the first identifier.

In a first possible manner, if the length of the first identifier satisfies the first condition, the network device sends the paging-related information to the terminal device indicated by the first identifier. For example, if the first identifier is an identifier of a terminal device (for example, denoted as a first terminal device), the terminal device indicated by the first identifier is the first terminal device.

In a second possible manner, if the length of the first identifier satisfies the second condition, the network device performs random access processing on the terminal device indicated by the first identifier.

In an optional embodiment, based on the quantity of to-be-paged terminal devices, the network device may send the paging-related information to the terminal device indicated by the first identifier, or perform random access processing on the terminal device indicated by the first identifier. For example, when the quantity of to-be-paged terminal devices is greater than a preset value (for example, denoted as the first value), the network device sends the paging-related information to the terminal device indicated by the first identifier; or when the quantity of to-be-paged terminal devices is less than a preset value (for example, denoted as the second value), the network device performs random access processing on the terminal device indicated by the first identifier.

For the first condition and the second condition, refer to the foregoing descriptions. To avoid repetition, details are not described herein again.

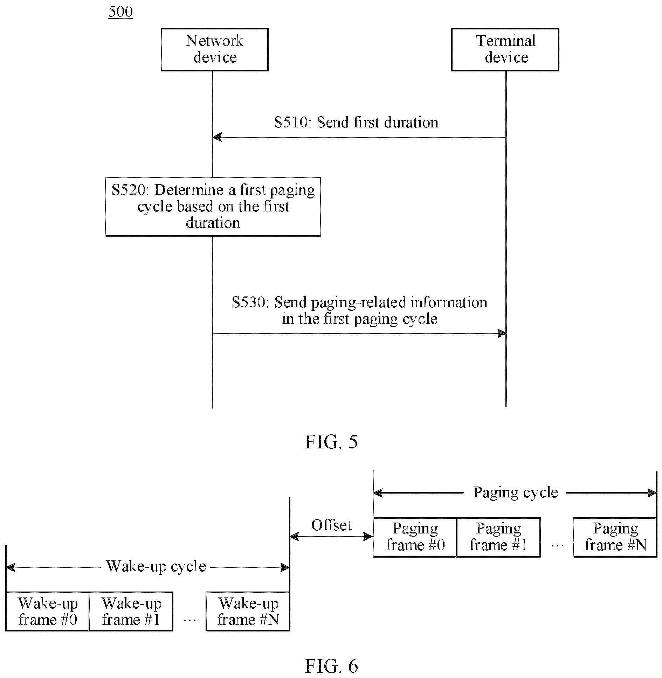

The following describes, with reference to FIG. 5 to FIG. 8, a communication method 500 and a method 600 provided in embodiments of this application. In the method 500 and the method 600, an occasion for sending paging-related information by a network device and an occasion for receiving the paging-related information by a terminal device are specified. This can avoid a case in which the terminal device misses receiving the paging-related information because the terminal device cannot determine when to receive the information.

FIG. 6 is a diagram of an example of one wake-up cycle and one paging cycle according to an embodiment of this application. The wake-up cycle may include at least one wake-up frame (for example, a wake-up frame #0 to a wake-up frame #N in FIG. 6), and the paging cycle may include at least one paging frame (for example, a paging frame #0 to a paging frame #N in FIG. 6). The wake-up frames may be consecutive or nonconsecutive in time domain. The paging frames may be consecutive or nonconsecutive in time domain. For ease of understanding, the following uses an example for description in which the wake-up frames are consecutive and the paging frames are consecutive in time domain.

In FIG. 6, it is assumed that a location of the wake-up cycle in L wake-up cycles is the same as a location of the paging cycle in M paging cycles, and there may be a specific offset (offset) between the wake-up cycle and the paging cycle, as shown in FIG. 6. L and M are positive integers, and L and M may be identical or different.

That the location of the wake-up cycle in the L wake-up cycles is the same as the location of the paging cycle in the M paging cycles can be understood as follows: For example, it is assumed that signals in five wake-up cycles are transmitted on a wake-up link, and signals in four paging cycles are transmitted on a main link. In this case, if the wake-up cycle is a 2^{nd} wake-up cycle of the five wake-up cycles, and the paging cycle is a 2^{nd} paging cycle of the four paging cycles, it may be considered that a location of the wake-up cycle in the five wake-up cycles is the same as a location of the paging cycle in the four paging cycles.

Optionally, a quantity of paging frames in the paging cycle is equal to a quantity of wake-up frames in the wake-up cycle.

Optionally, a quantity of paging occasions in the paging cycle is equal to a quantity of wake-up occasions in the wake-up cycle.

It should be understood that FIG. 6 is merely a simplified diagram used as an example for ease of understanding. In practice, a plurality of wake-up cycles and a plurality of paging cycles may be included, which are not drawn in FIG. 6.

FIG. 5 is a diagram of another example of a communication method according to an embodiment of this application. The method 500 may include S510 to S530.

S510: A terminal device sends first duration to a network device. Correspondingly, the network device receives the first duration from the terminal device.

The first duration is duration needed by the terminal device to wake up a main radio, and the first duration may be used by the network device to determine a first paging cycle. In this case, the network device may send paging-related information to the terminal device in the first paging cycle. Correspondingly, the terminal device may receive the paging-related information from the network device in the first paging cycle. In this embodiment, the terminal device may directly report the first duration to the network device, or may forward the first duration to the network device via one or more other devices. This is not limited in this application.

Optionally, the first duration can also be understood as duration needed from receiving, by the terminal device, a wake-up signal for waking up the terminal device to waking up the main radio; can be understood as duration needed from receiving, by the terminal device, a wake-up signal for waking up the terminal device to capable of normally receiving a signal (for example, a paging-related signal and/or an SSB signal) and/or sending a signal by the main radio; or can be understood as duration from a moment at which the network device sends a wake-up signal for waking up the terminal device to the terminal device to a moment at which the network device can send the paging-related information to the terminal device.

In this embodiment of this application, a start moment of the first duration can be understood as any one of the following moments: (1) a moment at which the terminal device receives the wake-up signal, where the moment at which the terminal device receives the wake-up signal includes: a moment at which the terminal device starts to receive the wake-up signal, or a moment after the terminal device receives the wake-up signal; (2) an end moment, in time domain, of wake-up indication information of the terminal device included in the wake-up signal for waking up the terminal device, or an end moment, in time domain, a check code corresponding to wake-up indication information of the terminal device included in the wake-up signal for waking up the terminal device, where the wake-up indication information may include, for example, an identifier of the paged terminal device or a group identifier of the terminal device; (3) an end moment of the wake-up signal for waking up the terminal device; (4) an end moment of a monitoring occasion on which the wake-up signal for waking up the terminal device is located; and (5) an end moment of a wake-up frame in which the wake-up signal for waking up the terminal device is located.

Optionally, the first duration is related to a cycle value of a paging cycle. For example, the first duration=f(the cycle value of the paging cycle), where f() represents a function.

In an example, the first duration may be N times the cycle value of the paging cycle, and N is a positive integer. For example, assuming that the first duration is denoted as T1 and the cycle value of the paging cycle is denoted as T2, the first duration is T1=T2×N. For example, the cycle value of the paging cycle may be cycle values of all possible paging cycles that may be configured by the network device for the terminal device. For example, the cycle values of the paging cycles may be 320 milliseconds, 640 milliseconds, 1280 milliseconds, and 2560 milliseconds.

In another example, the first duration may be a sum of an offset (for example, denoted as a first offset) and N times the cycle value of the paging cycle. For example, assuming that the first duration is denoted as T1, the cycle value of the paging cycle is denoted as T2, and the first offset is denoted as t1, the first duration is T1=T2×N+t1. For example, assuming that T2 is 1.28s and t1 is 0.01s, the first duration T1 may be (1.28×N+0.01)s. t1 may be a numeral greater than 0, or may be a numeral less than 0. This is not limited.

According to the method in this embodiment, the first duration provided by the terminal device for the network device may be a multiple of the paging cycle, or may be a sum of an offset and a multiple of the paging cycle. The method is simple in design and is easy to implement.

S520: The network device determines the first paging cycle based on the first duration.

The first paging cycle is a paging cycle in which the network device sends the paging-related information to the terminal device. In this case, the terminal device may receive the paging-related information in the first paging cycle, to avoid a case in which the terminal device misses receiving the paging-related information because the terminal device cannot determine when to receive the information.

In S520, the network device may determine the first paging cycle based on the first duration provided by the terminal device. In other words, the first paging cycle is associated with the first duration.

In an example, the first paging cycle may be a 1^{st} paging cycle after the terminal device wakes up the main radio, or the first paging cycle may be a 1^{st} paging cycle of the terminal device after the first duration starting from a first wake-up occasion. The first wake-up occasion is an occasion on which the terminal device receives the wake-up signal. In this way, the terminal device can receive the paging-related information quickly after waking up the main radio. This is conducive to reducing an unnecessary waiting time.

Optionally, the paging cycle after the terminal device wakes up the main radio can also be understood as a paging cycle that is present after the terminal device wakes up the main radio based on the wake-up signal after receiving the wake-up signal. "After waking up the main radio" can also be understood as "after the main radio can normally receive a signal (for example, the paging-related information and/or the SSB signal) or normally send a signal".

In another example, the first paging cycle may alternatively be an m^{th} paging cycle after the terminal device wakes up the main radio, or the first paging cycle may be an m^{th} (m>1) paging cycle of the terminal device after the first duration starting from a first wake-up occasion. A value of m can be flexibly adjusted based on an actual scenario, to adapt to different application scenarios.

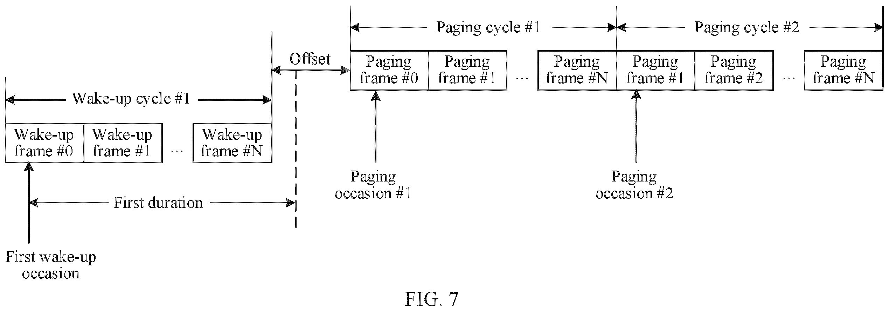

An n^{th} (n≥1) paging cycle after the terminal device wakes up the main radio can be understood as a paging cycle corresponding to (including) an n^{th} paging occasion after the terminal device wakes up the main radio. A location of a paging occasion of the terminal device in one paging cycle may be obtained through calculation based on the identifier of the terminal device. FIG. 7 is used as an example. It is assumed that a 1^{st} paging occasion after the terminal device wakes up the main radio is denoted as a paging occasion #1, a 2^{nd} paging occasion after the terminal device wakes up the main radio is denoted as a paging occasion #2, and locations of the paging occasion #1 and the paging occasion #2 in time domain are shown in FIG. 7. In this case, the 1^{st} paging cycle after the terminal device wakes up the main radio is a paging cycle corresponding to the paging occasion #1, namely, a paging cycle #1, and a 2^{nd} paging cycle after the terminal device wakes up the main radio is a paging cycle corresponding to the paging occasion #2, namely, a paging cycle #2. The location of the paging occasion #1 in the paging cycle #1 and the location of the paging occasion #2 in the paging cycle #2 are obtained through calculation based on the identifier of the terminal device.

In an optional embodiment, the network device may determine the first paging cycle without depending on the first duration. For example, the first paging cycle may be predefined in a protocol, may be determined according to a predefined rule, may be preconfigured, or may be dynamically configured. The network device may determine the first paging cycle by itself; or may receive a first paging cycle from another device to determine the first paging cycle, and therefore, S510 may not be performed in this case.

S530: The network device sends the paging-related information to the terminal device in the first paging cycle. Correspondingly, the terminal device receives the paging-related information from the network device in the first paging cycle.

Optionally, that the terminal device receives the paging-related information from the network device in the first paging cycle includes: The terminal device receives the paging-related information from the network device on a first paging occasion in the first paging cycle. A location of the first paging occasion in the first paging cycle is obtained through calculation based on the identifier of the terminal device.

Optionally, the location of the first paging occasion in the first paging cycle is associated with a location of the first wake-up occasion in a corresponding wake-up cycle. The first wake-up occasion is an occasion on which the terminal device receives the wake-up signal, or the first wake-up occasion is an occasion on which the terminal device starts to wake up the main radio.

In an implementation, the location of the first paging occasion in the first paging cycle is the same as the location of the first wake-up occasion in the corresponding wake-up cycle. Optionally, that the location of the first paging occasion in the first paging cycle is the same as the location of the first wake-up occasion in the corresponding wake-up cycle includes: A location that is in the first paging cycle and that is of a paging frame in which the first paging occasion is located is the same as a location that is in the corresponding wake-up cycle and that is of a wake-up frame in which the first wake-up occasion is located. For example, if the paging frame in which the first paging occasion is located is an n^{th} paging frame in the first paging cycle, the wake-up frame in which the first wake-up occasion is located is also an n^{th} wake-up frame in the corresponding wake-up cycle, where n is a positive integer. Optionally, a location of the first paging occasion in the paging frame is also the same as a location of the first wake-up occasion in the wake-up frame.

According to the method in this embodiment, the location of the first paging occasion in the first paging cycle is the same as the location of the first wake-up occasion in the corresponding wake-up cycle, so that the terminal device can receive the paging-related information quickly after waking up the main radio.

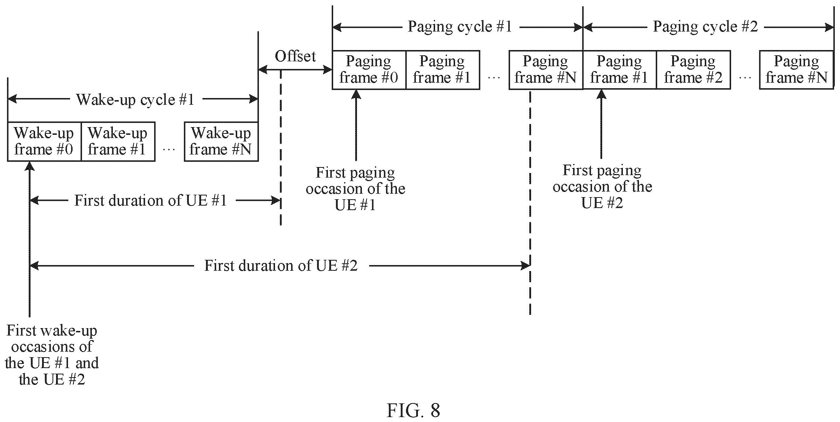

In an example, as shown in FIG. 8, the terminal device includes UE #1 and UE #2. In FIG. 8, it is assumed that cycle values of paging cycles (for example, including a paging cycle #1 and a paging cycle #2) are 1.28s, first wake-up occasions of the UE #1 and the UE #2 are the same (that is, occasions on which the UE #1 and the UE #2 receive wake-up signals are the same), first duration of the UE #1 (that is, duration in which the UE #1 wakes up a main radio) is equal to the cycle value of the paging cycle, that is, 1.28s, and first duration of the UE #2 (that is, duration in which the UE #2 wakes up a main radio) is twice the cycle value of the paging cycle, that is, 2.56s. In this case, it can be learned that a first paging cycle of the UE #1 is the paging cycle #1, and a first paging cycle of the UE #2 is the paging cycle #2. If a location of a first paging occasion of the UE #1 in the paging cycle #1 and a location of a first paging occasion of the UE #2 in the paging cycle #2 are the same as locations of the first wake-up occasions of the UE #1 and the UE #2 in a corresponding wake-up cycle (a wake-up cycle #1), both the UE #1 and the UE #2 can receive paging-related information quickly after waking up the main radios. Optionally, in this case, a value of an offset is properly adjusted, so that both the UE #1 and the UE #2 can receive the paging-related information immediately after waking up the main radios. This reduces a delay in receiving paging by the UE #1 and the UE #2.

In another implementation, the location of the first paging occasion in the first paging cycle satisfies a location relationship with the location of the first wake-up occasion in the corresponding wake-up cycle. Optionally, that the location of the first paging occasion in the first paging cycle satisfies a location relationship with the location of the first wake-up occasion in the corresponding wake-up cycle includes: A location that is in the first paging cycle and that is of a paging frame in which the first paging occasion is located satisfies a location relationship with a location that is in the corresponding wake-up cycle and that is of a wake-up frame in which the first wake-up occasion is located. For example, if the paging frame in which the first paging occasion is located is an n^{th} paging frame in the first paging cycle, the wake-up frame in which the first wake-up occasion is located may be an (n+1)^{th} wake-up frame or (n-1)^{th} wake-up frame in the corresponding wake-up cycle, where n is a positive integer.

Optionally, a location of the wake-up cycle corresponding to the first wake-up occasion in L wake-up cycles is the same as a location of the first paging cycle in M paging cycles. L and M are positive integers, and L and M may be identical or different.

Optionally, when the location of the wake-up cycle corresponding to the first wake-up occasion in the L wake-up cycles is the same as the location of the first paging cycle in the M paging cycles, an offset (offset) between the wake-up cycle corresponding to the first wake-up occasion and the first paging cycle is equal to third duration, and the third duration is any one of the following: duration between start locations of two adjacent wake-up frames, duration between start locations of two adjacent paging frames, and a larger one of the duration between the start locations of the two adjacent wake-up frames and the duration between the start locations of the two adjacent paging frames. The duration between the start locations of the two adjacent wake-up frames may be replaced with duration between end locations/middle locations of the two adjacent wake-up frames, and the duration between the start locations of the two adjacent paging frames may be replaced with duration between end locations/middle locations of the two adjacent paging frames.

Optionally, the offset (offset) between the wake-up cycle corresponding to the first wake-up occasion and the first paging cycle is equal to a sum of the third duration and a positive-integer multiple of the wake-up cycle, or is equal to a sum of the third duration and a positive-integer multiple of the paging cycle.

Optionally, an offset (offset) between a start moment of the first paging cycle and an end moment of a wake-up cycle that is closest to the start moment of the first paging cycle in time domain is equal to the third duration.

According to the method in this embodiment, the offset is properly adjusted, so that the terminal device can receive the paging-related information quickly after waking up the main radio.

In an optional embodiment, a method 800 may further include: The network device sends the paging-related information to the terminal device in a second paging cycle. The second paging cycle may be a next paging cycle of the first paging cycle, or may be a plurality of paging cycles after the first paging cycle. According to the method in this embodiment, if the terminal device misses receiving the paging-related information in the first paging cycle, the terminal device may receive paging in the second paging cycle. This is conducive to improving a success rate of receiving paging by the terminal device.

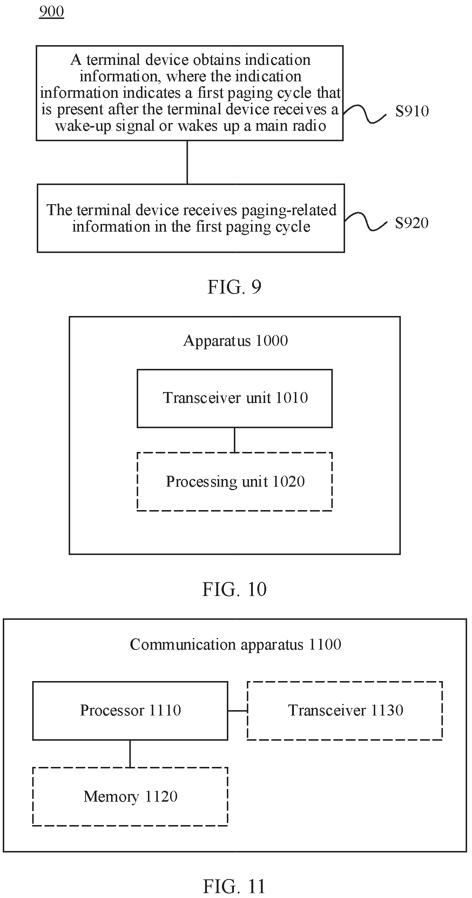

FIG. 9 is a diagram of still another example of a communication method according to an embodiment of this application. The method 900 may include S910 and S920.

S910: A terminal device obtains indication information, where the indication information indicates a first paging cycle that is present after the terminal device receives a wake-up signal or wakes up a main radio.

The first paging cycle indicated by the indication information may be predefined in a protocol, or may be configured by using radio resource control (radio resource control, RRC). The indication information may be prestored in the terminal device, or the indication information may be notified by another device to the terminal device. For example, the indication information may be carried in the wake-up signal, and in this case, a network device sends the wake-up signal to the terminal device. This is not limited in this application. When the indication information is carried in the wake-up signal and sent by the network device to the terminal device, the first paging cycle may be determined by the network device, and the indication information may indicate the first paging cycle determined by the network device.

In this embodiment, the first paging cycle is a paging cycle in which the network device sends paging-related information to the terminal device. Correspondingly, the terminal device may receive the paging-related information from the network device in the first paging cycle.

Optionally, a moment after the terminal device receives the wake-up signal can be understood as any one of the following moments: (1) an end moment, in time domain, of wake-up indication information of the terminal device included in the wake-up signal, or an end moment, in time domain, a check code corresponding to wake-up indication information of the terminal device included in the wake-up signal, where the wake-up indication information may include, for example, an identifier of the paged terminal device or a group identifier of the terminal device; (2) an end moment of the wake-up signal; (3) an end moment of a monitoring occasion on which the wake-up signal is located; and (4) an end moment of a wake-up frame in which the wake-up signal is located.

**In** a possible implementation, the indication information may indicate the terminal device to receive the paging-related information in a K^{th} paging cycle that is present after the terminal device receives the wake-up signal or wakes up the main radio, or in other words, the first paging cycle is the K^{th} paging cycle after the terminal device wakes up the main radio, where K is a positive integer.

For example, when a value of K is 1, it indicates that the terminal device receives the paging-related information in a 1^{st} paging cycle that is present after the terminal device receives the wake-up signal or wakes up the main radio. K can be flexibly adjusted based on an actual scenario, to adapt to different application scenarios.

**In** a possible case, the 1^{st} paging cycle after the terminal device receives the wake-up signal may be a paging cycle that overlaps the wake-up signal in time domain, or may be a next paging cycle of a paging cycle that overlaps the wake-up signal in time domain. In another possible case, the 1^{st} paging cycle after the terminal device receives the wake-up signal may be a paging cycle that overlaps, in time domain, a wake-up cycle or a wake-up frame corresponding to the wake-up signal (on which the wake-up signal is located), or may be a next paging cycle of a paging cycle that overlaps, in time domain, a wake-up cycle or a wake-up frame corresponding to the wake-up signal (on which the wake-up signal is located).

In a possible case, the 1^{st} paging cycle after the terminal device wakes up the main radio may be a paging cycle that overlaps, in time domain, a period during which the terminal device wakes up the main radio, or may be a next paging cycle of a paging cycle that overlaps, in time domain, a period during which the terminal device wakes up the main radio. In an optional manner, "the paging cycle that overlaps the period in time domain" may be replaced with "a last paging cycle that overlaps the period in time domain".

Optionally, the K^{th} paging cycle after the terminal device receives the wake-up signal or wakes up the main radio can be understood as a paging cycle corresponding to (including) a K^{th} paging occasion that is present after the terminal device receives the wake-up signal or wakes up the main radio. A location of a paging occasion of the terminal device in one paging cycle may be obtained through calculation based on the identifier of the terminal device.

In another possible implementation, the indication information may indicate the terminal device to receive the paging-related information in a paging cycle corresponding to a K^{th} wake-up cycle that is present after the terminal device receives the wake-up signal or wakes up the main radio. A 1^{st} wake-up cycle after the terminal device receives the wake-up signal may be a corresponding wake-up cycle when the terminal device receives the wake-up signal, or may be a next wake-up cycle of a corresponding wake-up cycle when the terminal device receives the wake-up signal. A 1^{st} wake-up cycle after the terminal device wakes up the main radio may be a corresponding wake-up cycle when the terminal device wakes up the main radio, or may be a next wake-up cycle of a corresponding wake-up cycle when the terminal device wakes up the main radio. For example, that the K^{th} wake-up cycle is corresponding to a paging cycle can be understood as follows: There is a correspondence between a time domain location of the K^{th} wake-up cycle and a time domain location of the paging cycle. Optionally, a paging cycle that overlaps a wake-up cycle in time domain can be understood as the paging cycle corresponding to the wake-up cycle; a last paging cycle that overlaps a wake-up cycle in time domain can be understood as the paging cycle corresponding to the wake-up cycle; or a paging cycle that is closest to a start moment of a wake-up cycle in time domain can be understood as the paging cycle corresponding to the wake-up cycle. Optionally, the start time of the wake-up cycle may be replaced with an end moment or an intermediate moment of the wake-up cycle.

According to the method in this embodiment, the indication information may indicate the first paging cycle by using a "paging cycle" or a "wake-up cycle" as a granularity. The first paging cycle is indicated by using the "paging cycle" or the "wake-up cycle" as a granularity, to avoid a case in which the terminal device cannot determine when to receive the paging-related information. The method is simple in design and is easy to implement. For example, the wake-up cycle or the paging cycle may be a cell-specific wake-up cycle or paging cycle, to reduce indication complexity of the network device; or the wake-up cycle or the paging cycle may be a terminal-device-specific wake-up cycle or paging cycle, to implement a more refined indication and reduce a paging delay.

Optionally, the first paging cycle is determined based on first information. Based on the first information, the value of K may be set to 1, the value of K may be set to be less than a predefined threshold, or the value of K may be set to a minimum value that meets a wake-up capability requirement of the terminal device.

For example, the first information may include priority information, delay requirement information, or the like of the terminal device. Priorities of terminal devices may be classified based on a service type, a power consumption requirement, or a terminal type.

In an example, for a terminal device with a high priority or a high delay requirement, the value of K may be set to 1, the value of K may be set to be less than a predefined threshold, or the value of K may be set to a minimum value that meets a wake-up capability requirement of the terminal device, so that the terminal device can receive the paging-related information quickly after waking up the main radio.

In another example, it is assumed that two terminal devices with different priorities are denoted as a terminal device #1 and a terminal device #2. If a priority of the terminal device #1 is higher than a priority of the terminal device #2, a waiting time for receiving the paging-related information by the terminal device #1 is less than a waiting time for receiving the paging-related information by the terminal device #2. For example, a first paging cycle of the terminal device #1 is a 1^{st} paging cycle after the terminal device #1 wakes up a main radio, and a first paging cycle of the terminal device #2 is a 2^{nd} paging cycle after the terminal device #2 wakes up a main radio. In this case, the terminal device #1 may receive the paging-related information in the 1^{st} paging cycle that is present after the terminal device #1 wakes up the main radio, and the terminal device #2 may receive the paging-related information in the 2^{nd} paging cycle that is present after the terminal device #2 wakes up the main radio. It should be understood that the priorities in this example may be replaced with delay requirements.

First paging cycles of different terminal devices are determined based on priorities or delay requirements of the different terminal device, so that a terminal device with a high priority or a high delay requirement can receive the paging-related information quickly after waking up the main radio, thereby reducing an unnecessary waiting time.

Optionally, the terminal device includes a plurality of terminal devices, for example, includes a first terminal device and a second terminal device. A first paging cycle after the first terminal device wakes up a main radio is the same as a first paging cycle after the second terminal device wakes up a main radio.

For example, a same first paging cycle may be configured for both the first terminal device and the second terminal device by using the indication information, so that the first terminal device and the second terminal device can receive the paging-related information in the same paging cycle. A same first paging cycle is configured for all of a plurality of terminal devices. This is conducive to reducing complexity of paging the plurality of terminal devices by the network device, and is easy to implement.

S920: The terminal device receives the paging-related information in the first paging cycle.

In S920, the terminal device may receive the paging-related information from the network device in the first paging cycle that is present after the terminal device wakes up the main radio.

According to the method in this embodiment, the terminal device may receive, according to an indication of the indication information, the paging-related information in the first paging cycle that is present after the terminal device wakes up the main radio, to avoid a case in which the terminal device cannot determine when to receive the paging-related information.

It can be understood that the examples in FIG. 4 to FIG. 9 in embodiments of this application are merely intended to help a person skilled in the art understand embodiments of this application, but are not intended to limit embodiments of this application to specific scenarios in the examples. It is clear that a person skilled in the art can make various equivalent modifications or changes to the examples in FIG. 4 to FIG. 9, and such modifications or variations also fall within the scope of embodiments of this application.

It can also be understood that in some scenarios, paging and wake-up in embodiments of this application may be replaced with each other.

It can also be understood that some optional features in embodiments of this application may be independent of other features in some scenarios, or may be combined with other features in some scenarios. This is not limited.

It can also be understood that the solutions in embodiments of this application may be appropriately combined for use, and interpretations or descriptions of terms in embodiments may be mutually referenced or interpreted in embodiments. This is not limited.

It can also be understood that various numeric sequence numbers in embodiments of this application do not mean execution sequences, but are merely for differentiation for ease of description, and therefore should not constitute any limitation on an implementation process of embodiments of this application.

It can also be understood that numbers such as "first", "second", #1, and #2 in embodiments of this application are merely used for differentiation for ease of description, but are not intended to limit the scope of embodiments of this application.

It can also be understood that names of information transmitted between communication apparatuses in embodiments of this application do not constitute any limitation on the protection scope of embodiments of this application.

It can also be understood that in this specification, a term "and/or" describes only an association relationship for describing associated objects, and indicates that three relationships may exist. For example, A and/or B may indicate the following three cases: Only A exists, both A and B exist, and only B exists. In addition, a character "/" in this specification generally indicates an "or" relationship between associated objects.

It can also be understood that in the foregoing method embodiments, the methods and operations implemented by the network device may be alternatively implemented by a component (for example, a chip or a circuit) of the network device. This is not limited.

Corresponding to the methods provided in the foregoing method embodiments, an embodiment of this application further provides a corresponding apparatus. The apparatus includes corresponding modules configured to perform the foregoing method embodiments. The modules may be software, hardware, or a combination of software and hardware. It can be understood that the technical features described in the foregoing method embodiments are also applicable to the following apparatus embodiments.

FIG. 10 is a block diagram of a communication apparatus 1000 according to an embodiment of this application. The apparatus 1000 includes a transceiver unit 1010. The transceiver unit 1010 may be configured to implement a corresponding communication function. The transceiver unit 1010 may also be referred to as a communication interface or a communication unit.

Optionally, the apparatus 1000 further includes a processing unit 1020, where the processing unit 1020 may be configured to implement a corresponding processing function.

Optionally, the apparatus 1000 further includes a storage unit, where the storage unit may be configured to store instructions and/or data. When the apparatus 1000 includes the processing unit 1020, the processing unit 1020 may read the instructions and/or data in the storage unit, so that the apparatus implements actions of the device (for example, the terminal device or the network device) in the foregoing method embodiments.

In a first design, the apparatus 1000 may be the terminal device in the foregoing embodiments, or may be a component (for example, a chip) of the terminal device. The apparatus 1000 may implement corresponding steps or procedures performed by the terminal device in the foregoing method embodiments. The transceiver unit 1010 may be configured to perform operations related to sending and receiving of the terminal device in the foregoing method embodiments. The processing unit 1020 may be configured to perform a processing-related operation of the terminal device in the foregoing method embodiments. When the apparatus 1000 is a terminal device, the transceiver unit 1010 may be a transceiver or an input/output interface, and the processing unit 1020 may be at least one processor. Optionally, the transceiver may be a transceiver circuit. Optionally, the input/output interface may be an input/output circuit. When the apparatus 1000 is a chip, a chip system, or a circuit in the terminal device, the transceiver unit 1010 may be an input/output interface, an interface circuit, an output circuit, an input circuit, a pin, a related circuit, or the like of the chip, the chip system, or the circuit, and the processing unit 1020 may be at least one processor, processing circuit, logic circuit, or the like.

In a possible implementation, the transceiver unit 1010 is configured to receive a wake-up signal from a network device, where the wake-up signal includes a first identifier; and when the first identifier is an identifier of the apparatus 1000, the transceiver unit 1010 is further configured to receive paging-related information based on a length of the first identifier or initiate random access based on a length of the first identifier.

Optionally, if the length of the first identifier satisfies a first condition, the transceiver unit 1010 is further configured to receive the paging-related information; or if the length of the first identifier satisfies a second condition, the transceiver unit 1010 is further configured to initiate random access. The first condition is different from the second condition.

Optionally, the first condition is that the length of the first identifier is less than or equal to a first preset value; and/or the second condition is that the length of the first identifier is greater than or equal to a second preset value.

Optionally, the transceiver unit 1010 is further configured to initiate random access when the paging-related information includes the identifier of the apparatus 1000; or the transceiver unit 1010 is further configured to continue to monitor the wake-up signal when the paging-related information does not include the identifier of the apparatus 1000.

Optionally, the paging-related information includes one or more of the following: a paging message, a paging early indication PEI, and a paging physical downlink control channel PDCCH.

Optionally, the wake-up signal includes the length of the first identifier.

In another possible implementation, the transceiver unit 1010 is configured to send first duration to a network device, where the first duration is duration needed by the apparatus 1000 to wake up a main radio, and the first duration is related to a cycle value of a paging cycle; and the apparatus 1000 receives paging-related information from the network device in a first paging cycle, where the first paging cycle is associated with the first duration.

Optionally, the first duration is N times the cycle value of the paging cycle, and N is a positive integer.

Optionally, the transceiver unit 1010 is configured to receive the paging-related information from the network device on a first paging occasion in the first paging cycle, where a location of the first paging occasion in the first paging cycle is associated with a location of a first wake-up occasion in a corresponding wake-up cycle, and the first wake-up occasion is an occasion on which the apparatus 1000 receives a wake-up signal.

Optionally, the location of the first paging occasion in the first paging cycle is the same as the location of the first wake-up occasion in the corresponding wake-up cycle.

Optionally, a location of the wake-up cycle corresponding to the first wake-up occasion in L wake-up cycles is the same as a location of the first paging cycle in M paging cycles, an offset between the wake-up cycle corresponding to the first wake-up occasion and the first paging cycle is equal to third duration, L and M are positive integers, and the third duration is any one of the following: duration between start locations of two adjacent wake-up frames, duration between start locations of two adjacent paging frames, and a larger one of the duration between the start locations of the two adjacent wake-up frames and the duration between the start locations of the two adjacent paging frames.

In still another possible implementation, the transceiver unit 1010 is configured to obtain indication information, where the indication information indicates a first paging cycle that is present after the apparatus 1000 wakes up a main radio; and the transceiver unit 1010 is further configured to receive paging-related information in the first paging cycle.

Optionally, the first paging cycle is a K^{th} paging cycle after the apparatus 1000 wakes up the main radio, and K is a positive integer.

Optionally, the first paging cycle is determined based on a priority or a delay requirement of the apparatus 1000.

Optionally, the transceiver unit 1010 is further configured to receive a wake-up signal from a network device, where the wake-up signal includes the indication information.

Optionally, the apparatus 1000 includes a first terminal device and a second terminal device, and a first paging cycle after the first terminal device wakes up a main radio is the same as a first paging cycle after the second terminal device wakes up a main radio.

In a second design, the apparatus 1000 may be the network device in the foregoing embodiments, or may be a component (for example, a chip) of the network device. The apparatus 1000 may implement corresponding steps or procedures performed by the network device in the foregoing method embodiments. The transceiver unit 1010 may be configured to perform operations related to sending and receiving of the network device in the foregoing method embodiments. The processing unit 1020 may be configured to perform a processing-related operation of the network device in the foregoing method embodiments. When the apparatus 1000 is a network device, the transceiver unit 1010 may be a transceiver or an input/output interface, and the processing unit 1020 may be at least one processor. Optionally, the transceiver may be a transceiver circuit. Optionally, the input/output interface may be an input/output circuit. When the apparatus 1000 is a chip, a chip system, or a circuit in the network device, the transceiver unit 1010 may be an input/output interface, an interface circuit, an output circuit, an input circuit, a pin, a related circuit, or the like of the chip, the chip system, or the circuit, and the processing unit 1020 may be at least one processor, processing circuit, logic circuit, or the like.

In a possible implementation, the processing unit 1020 is configured to generate a wake-up signal, where the wake-up signal includes a first identifier, and a length of the first identifier is associated with a quantity of to-be-paged terminal devices. The transceiver unit 1010 is configured to send the wake-up signal to the to-be-paged terminal device based on the length of the first identifier. The transceiver unit 1010 is further configured to send, based on the length of the first identifier, paging-related information to a terminal device indicated by the first identifier, or the processing unit 1020 is further configured to perform, based on the length of the first identifier, random access processing on a terminal device indicated by the first identifier.

Optionally, if the quantity of to-be-paged terminal devices satisfies a third condition, the length of the first identifier is a first length.

Optionally, the paging-related information includes one or more of the following: a paging message, a paging early indication PEI, and a paging physical downlink control channel PDCCH.

Optionally, the wake-up signal includes the length of the first identifier.

In another possible implementation, the transceiver unit 1010 is configured to receive first duration from a terminal device, where the first duration is duration needed by the terminal device to wake up a main radio, and the first duration is related to a cycle value of a paging cycle; and the transceiver unit 1010 is further configured to send paging-related information to the terminal device in a first paging cycle, where the first paging cycle is associated with the first duration.

Optionally, the first duration is N times the cycle value of the paging cycle, and N is a positive integer.

Optionally, the transceiver unit 1010 is further configured to send the paging-related information to the terminal device on a first paging occasion in the first paging cycle, where a location of the first paging occasion in the first paging cycle is associated with a location of a first wake-up occasion in a corresponding wake-up cycle, and the first wake-up occasion is an occasion on which the terminal device receives a wake-up signal.

Optionally, the location of the first paging occasion in the first paging cycle is the same as the location of the first wake-up occasion in the corresponding wake-up cycle.

Optionally, a location of the wake-up cycle corresponding to the first wake-up occasion in L wake-up cycles is the same as a location of the first paging cycle in M paging cycles, an offset between the wake-up cycle corresponding to the first wake-up occasion and the first paging cycle is equal to third duration, L and M are positive integers, and the third duration is any one of the following: duration between start locations of two adjacent wake-up frames, duration between start locations of two adjacent paging frames, and a larger one of the duration between the start locations of the two adjacent wake-up frames and the duration between the start locations of the two adjacent paging frames.

In still another possible implementation, the processing unit 1020 is configured to determine a first paging cycle that is present after a terminal device wakes up a main radio, where the first paging cycle is used by the terminal device to receive paging-related information; and the transceiver unit 1010 is configured to send indication information to the terminal device, where the indication information indicates the first paging cycle.

Optionally, the first paging cycle is a K^{th} paging cycle after the terminal device wakes up the main radio, and K is a positive integer.

Optionally, the first paging cycle is determined based on a priority or a delay requirement of the terminal device.

It should be understood that specific processes of performing the corresponding steps by various units have been detailed in the foregoing method embodiments. For brevity, details are not described herein again.

It should also be understood that the apparatus 1000 herein is embodied in a form of a functional unit. The term "unit" herein may be an application-specific integrated circuit (application-specific integrated circuit, ASIC), an electronic circuit, a processor configured to execute one or more software or firmware programs (for example, a shared processor, a dedicated processor, or a packet processor), a memory, a combined logic circuit, and/or another appropriate component supporting the described functions. In an optional example, a person skilled in the art can understand that, the apparatus 1000 may be specifically the terminal device in the foregoing embodiments, and may be configured to perform the procedures and/or steps corresponding to the terminal device in the foregoing method embodiments. Alternatively, the apparatus 1000 may be specifically a network in the foregoing embodiments, and may be configured to perform the procedures and/or steps corresponding to the network device in the foregoing method embodiments. To avoid repetition, details are not described herein again.

The apparatus 1000 in each of the foregoing solutions has functions of implementing corresponding steps performed by the device (for example, the terminal device or the network device) in the foregoing methods. The functions may be implemented by using hardware, or may be implemented by hardware executing corresponding software. The hardware or the software includes one or more modules corresponding to the foregoing functions. For example, the transceiver unit may be replaced with a transceiver (for example, a sending unit in the transceiver unit may be replaced with a transmitter, and a receiving unit in the transceiver unit may be replaced with a receiver), and another unit, for example, the processing unit, may be replaced with a processor, to respectively perform sending and receiving operations and related processing operations in the method embodiments.

In addition, the transceiver unit 1010 may be alternatively a transceiver circuit (which may include, for example, a receiving circuit and a sending circuit), and the processing unit 1020 may be a processing circuit.

It should be noted that the apparatus in FIG. 10 may be the device in the foregoing embodiments, or may be a chip or a chip system, for example, a system on chip (system on chip, SoC). The transceiver unit may be an input/output circuit or a communication interface. The processing unit is a processor, a microprocessor, or an integrated circuit integrated on the chip. This is not limited herein.

As shown in FIG. 11, an embodiment of this application provides another communication apparatus 1100. The apparatus 1100 includes a processor 1110. The processor 1110 is configured to execute a computer program or instructions stored in a memory 1120, or read data/signaling stored in the memory 1120, to perform the methods in the foregoing method embodiments. Optionally, there are one or more processors 1110.

Optionally, as shown in FIG. 11, the apparatus 1100 further includes the memory 1120, where the memory 1120 is configured to store the computer program or instructions and/or data. The memory 1120 and the processor 1110 may be integrated, or may be disposed separately. Optionally, there are one or more memories 1120.

Optionally, as shown in FIG. 11, the apparatus 1100 may further include a transceiver 1130, where the transceiver 1130 is configured to receive a signal and/or send a signal. For example, the processor 1110 is configured to control the transceiver 1130 to receive the signal and/or send the signal.

In a solution, the apparatus 1100 is configured to implement operations performed by the terminal device in the foregoing method embodiments.

For example, the processor 1110 is configured to execute the computer program or instructions stored in the memory 1120, to implement related operations performed by the terminal device in the foregoing method embodiments.

In another solution, the apparatus 1100 is configured to implement operations performed by the network device in the foregoing method embodiments.

For example, the processor 1110 is configured to execute the computer program or instructions stored in the memory 1120, to implement related operations performed by the network device in the foregoing method embodiments.

It should be understood that the processor mentioned in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate, a transistor logic device, a discrete hardware component, or the like. The general-purpose processor may be a microprocessor, or the processor may be any conventional processor or the like.

It should also be understood that the memory mentioned in this embodiment of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example rather than limitation, the RAM includes a plurality of forms as follows: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, **DDR** SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, **DR** RAM).

It should be noted that when the processor is a general-purpose processor, a DSP, an ASIC, an FPGA, another programmable logic device, a discrete gate, a transistor logic device, or a discrete hardware component, the memory (storage module) may be integrated into the processor.

It should also be noted that the memories described in this specification are intended to include but are not limited to these memories and any other appropriate types of memories.

An embodiment of this application further provides a computer-readable storage medium. The computer-readable storage medium stores computer instructions used to implement the method performed by the device (for example, the terminal device or the network device) in the foregoing method embodiments.

For example, when a computer program is executed by a computer, the computer is enabled to implement the method performed by the terminal device in the foregoing method embodiments.

For another example, when a computer program is executed by a computer, the computer is enabled to implement the method performed by the network device in the foregoing method embodiments.

An embodiment of this application further provides a computer program product, including instructions. When the instructions are executed by a computer, the method performed by the device (for example, the terminal device or the network device) in the foregoing method embodiments is implemented.

An embodiment of this application further provides a communication system, including the foregoing terminal device and network device.

For descriptions of related content and beneficial effects of any apparatus provided above, refer to the corresponding method embodiments provided above. Details are not described herein again.

In the several embodiments provided in this application, it should be understood that the disclosed apparatuses and methods may be implemented in other manners. For example, the described apparatus embodiments are merely examples. For example, division into units is merely logical function division and may be other division during actual implementation. For example, a plurality of units or components may be combined or may be integrated into another system, or some features may be ignored or not be performed. **In** addition, the displayed or discussed mutual couplings or direct couplings or communication connections may be implemented through some interfaces. The indirect couplings or communication connections between the apparatuses or units may be implemented in an electrical form, a mechanical form, or another form.

All or some of the foregoing embodiments may be implemented by using software, hardware, firmware, or any combination thereof. When software is used to implement the foregoing embodiments, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or another programmable apparatus. For example, the computer may be a personal computer, a server, a network device, or the like. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible to a computer, or a data storage device, like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. The usable medium may include but is not limited to any medium that can store program code, like a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, comprising:
receiving, by a terminal device, a wake-up signal from a network device, wherein the wake-up signal comprises a first identifier; and
when the first identifier is an identifier of the terminal device, receiving, by the terminal device, paging-related information based on a length of the first identifier or initiating random access based on a length of the first identifier.

2. The method according to claim 1, wherein the receiving, by the terminal device, paging-related information based on a length of the first identifier or initiating random access based on a length of the first identifier comprises:
if the length of the first identifier satisfies a first condition, receiving, by the terminal device, the paging-related information; or
if the length of the first identifier satisfies a second condition, initiating, by the terminal device, random access; wherein
the first condition is different from the second condition.

3. The method according to claim 2, wherein
the first condition is that the length of the first identifier is less than or equal to a first preset value; and/or
the second condition is that the length of the first identifier is greater than or equal to a second preset value.

4. The method according to claim 2 or 3, wherein the length of the first identifier satisfies the first condition, and the method further comprises:
initiating, by the terminal device, random access when the paging-related information comprises the identifier of the terminal device; or
continuing, by the terminal device, to monitor the wake-up signal when the paging-related information does not comprise the identifier of the terminal device.

5. The method according to any one of claims 1 to 4, wherein the paging-related information comprises one or more of the following:
a paging message, a paging early indication PEI, and a paging physical downlink control channel PDCCH.

6. The method according to any one of claims 1 to 5, wherein
the wake-up signal comprises the length of the first identifier.

7. A communication method, comprising:
generating, by a network device, a wake-up signal, wherein the wake-up signal comprises a first identifier, and a length of the first identifier is associated with a quantity of to-be-paged terminal devices;
sending, by the network device, the wake-up signal to the to-be-paged terminal device; and
sending, by the network device based on the length of the first identifier, paging-related information to a terminal device indicated by the first identifier, or performing, by the network device based on the length of the first identifier, random access processing on a terminal device indicated by the first identifier.

8. The method according to claim 7, wherein
if the quantity of to-be-paged terminal devices satisfies a third condition, the length of the first identifier is a first length.

9. The method according to claim 7 or 8, wherein the paging-related information comprises one or more of the following:
a paging message, a paging early indication PEI, and a paging physical downlink control channel PDCCH.

10. The method according to any one of claims 7 to 9, wherein
the wake-up signal comprises the length of the first identifier.

11. A communication method, comprising:
sending, by a terminal device, first duration to a network device, wherein the first duration is duration needed by the terminal device to wake up a main radio, and the first duration is related to a cycle value of a paging cycle; and
receiving, by the terminal device, paging-related information from the network device in a first paging cycle, wherein the first paging cycle is associated with the first duration.

12. The method according to claim 11, wherein
the first duration is N times the cycle value of the paging cycle, and N is a positive integer.

13. The method according to claim 11 or 12, wherein the receiving, by the terminal device, paging-related information from the network device in a first paging cycle comprises:
receiving, by the terminal device, the paging-related information from the network device on a first paging occasion in the first paging cycle, wherein
a location of the first paging occasion in the first paging cycle is associated with a location of a first wake-up occasion in a corresponding wake-up cycle, and the first wake-up occasion is an occasion on which the terminal device receives a wake-up signal.

14. The method according to claim 13, wherein
the location of the first paging occasion in the first paging cycle is the same as the location of the first wake-up occasion in the corresponding wake-up cycle.

15. The method according to claim 13 or 14, wherein
a location of the wake-up cycle corresponding to the first wake-up occasion in L wake-up cycles is the same as a location of the first paging cycle in M paging cycles, an offset between the wake-up cycle corresponding to the first wake-up occasion and the first paging cycle is equal to third duration, L and M are positive integers, and the third duration is any one of the following:
duration between start locations of two adjacent wake-up frames, duration between start locations of two adjacent paging frames, and a larger one of the duration between the start locations of the two adjacent wake-up frames and the duration between the start locations of the two adjacent paging frames.

16. A communication method, comprising:
receiving, by a network device, first duration from a terminal device, wherein the first duration is duration needed by the terminal device to wake up a main radio, and the first duration is related to a cycle value of a paging cycle; and
sending, by the network device, paging-related information to the terminal device in a first paging cycle, wherein the first paging cycle is associated with the first duration.

17. The method according to claim 16, wherein
the first duration is N times the cycle value of the paging cycle, and N is a positive integer.

18. The method according to claim 16 or 17, wherein the sending, by the network device, paging-related information to the terminal device in a first paging cycle comprises:
sending, by the network device, the paging-related information to the terminal device on a first paging occasion in the first paging cycle, wherein
a location of the first paging occasion in the first paging cycle is associated with a location of a first wake-up occasion in a corresponding wake-up cycle, and the first wake-up occasion is an occasion on which the terminal device receives a wake-up signal.

19. The method according to claim 18, wherein
the location of the first paging occasion in the first paging cycle is the same as the location of the first wake-up occasion in the corresponding wake-up cycle.

20. The method according to claim 18 or 19, wherein
a location of the wake-up cycle corresponding to the first wake-up occasion in L wake-up cycles is the same as a location of the first paging cycle in M paging cycles, an offset between the wake-up cycle corresponding to the first wake-up occasion and the first paging cycle is equal to third duration, L and M are positive integers, and the third duration is any one of the following:
duration between start locations of two adjacent wake-up frames, duration between start locations of two adjacent paging frames, and a larger one of the duration between the start locations of the two adjacent wake-up frames and the duration between the start locations of the two adjacent paging frames.

21. A communication method, comprising:
obtaining, by a terminal device, indication information, wherein the indication information indicates a first paging cycle that is present after the terminal device wakes up a main radio; and
receiving, by the terminal device, paging-related information in the first paging cycle.

22. The method according to claim 21, wherein
the first paging cycle is a K^{th} paging cycle after the terminal device wakes up the main radio, and K is a positive integer.

23. The method according to claim 21 or 22, wherein
the first paging cycle is determined based on a priority or a delay requirement of the terminal device.

24. The method according to any one of claims 21 to 23, wherein the obtaining, by a terminal device, indication information comprises:
receiving, by the terminal device, a wake-up signal from a network device, wherein the wake-up signal comprises the indication information.

25. A communication method, comprising:
determining, by a network device, a first paging cycle that is present after a terminal device wakes up a main radio, wherein the first paging cycle is used by the terminal device to receive paging-related information; and
sending, by the network device, indication information to the terminal device, wherein the indication information indicates the first paging cycle.

26. The method according to claim 25, wherein
the first paging cycle is a K^{th} paging cycle after the terminal device wakes up the main radio, and K is a positive integer.

27. The method according to claim 25 or 26, wherein
the first paging cycle is determined based on a priority or a delay requirement of the terminal device.

28. A communication apparatus, comprising:
a unit configured to implement the method according to any one of claims 1 to 6, a unit configured to implement the method according to any one of claims 7 to 10, a unit configured to implement the method according to any one of claims 11 to 15, a unit configured to implement the method according to any one of claims 16 to 20, a unit configured to implement the method according to any one of claims 21 to 24, or a unit configured to implement the method according to any one of claims 25 to 27.

29. A communication apparatus, comprising a processor and a memory, wherein
the memory is configured to store a computer program or instructions, and the processor is configured to execute the computer program or instructions in the memory, so that the method according to any one of claims 1 to 6 is performed, the method according to any one of claims 7 to 10 is performed, the method according to any one of claims **11** to 15 is performed, the method according to any one of claims 16 to 20 is performed, the method according to any one of claims 21 to 24 is performed, or the method according to any one of claims 25 to 27 is performed.

30. A computer-readable storage medium, wherein the computer-readable storage medium stores a computer program, and when the computer program is run on a computer, the computer is enabled to perform the method according to any one of claims 1 to 6, the computer is enabled to perform the method according to any one of claims 7 to 10, the computer is enabled to perform the method according to any one of claims **11** to 15, the computer is enabled to perform the method according to any one of claims 16 to 20, the computer is enabled to perform the method according to any one of claims 21 to 24, or the computer is enabled to perform the method according to any one of claims 25 to 27.
